# EUROPEAN PATENT APPLICATION

(11) **EP 1 130 834 A1**
(43) Date of publication of application: **05.09.2001**
(21) Application number: 00948247.2
(22) Date of filing: 27.07.2000
(51) Int. Cl.: H04J 13/04, H04L 1/16

(54) **MOBILE COMMUNICATION SYSTEM, BASE STATION, MOBILE COMMUNICATION TERMINAL, AND RESENDING CONTROL METHOD**

(30) Priority: 02.08.1999 JP 21850999
(71) Applicant: MITSUBISHI DENKI KABUSHIKI KAISHA, Tokyo 100-8310 (JP)
(72) Inventor: YAMADA, Takamitsu, Mitsubishi Denki Kab. Kaisha, Tokyo 100-8310 (JP); KIKUCHI, Nobuo, Mitsubishi Denki Kabushiki Kaisha, Tokyo 100-8310 (JP); SHIBUYA, Akihiro, Mitsubishi Denki Kab. Kaisha, Tokyo 100-8310 (JP); AOYAGI, Hidenori, Mitsubishi Denki Kab. Kaisha, Tokyo 100-8310 (JP)
(74) Representative: Pfenning, Meinig & Partner
(86) International application number: JP0005017
(87) International publication number: WO0110068

(57) **Abstract**

Includes a base station (2) that measures an uplink interference value of a transmission path when a data error has occurred in reception packets multiplexed by plurality, generates a retransmission request signal of a packet format based on the measured uplink interference value, and then transmits the retransmission request signal to a mobile communication terminal that has transmitted the erroneous packet; and a mobile communication terminal (1) that outputs multiplexed transmission data as a transmission packet during a normal transmission, automatically divides the transmission data into parallel signals according to a retransmission multiplex number based on the retransmission request signal when the retransmission request signal has been received, further multiplexes the parallel signals to generate a transmission packet for retransmission, and outputs the transmission packet to the base station.

## Description

### TECHNICAL FIELD

The present invention relates to a mobile communication system, a base station, and a mobile communication terminal for carrying out a packet transmission according to the spread ALOHA system, in a radio communication that employs the code division multiple access (CDMA) system. Particularly, this invention relates to a retransmission control method to be used when a data error has occurred in a reception packet.

### BACKGROUND ART

A conventional retransmission control method that has been used when a data error has occurred in a reception packet will be explained below. According to a radio communication that employs the CDMA system as a communication system, the information to be transmitted is diffused by different codes to channels so that the information on the plurality of channels can be multiplexed in the same frequency. As amethod of high-speed transmitting one call information by utilizing this characteristic, there is a multi-code transmission (multiple transmission) method that carries out a high-speed transmission by allocating a plurality of codes (channels, codes) to one call. By this method, the information can be transmitted faster than when the information is transmitted using one channel.

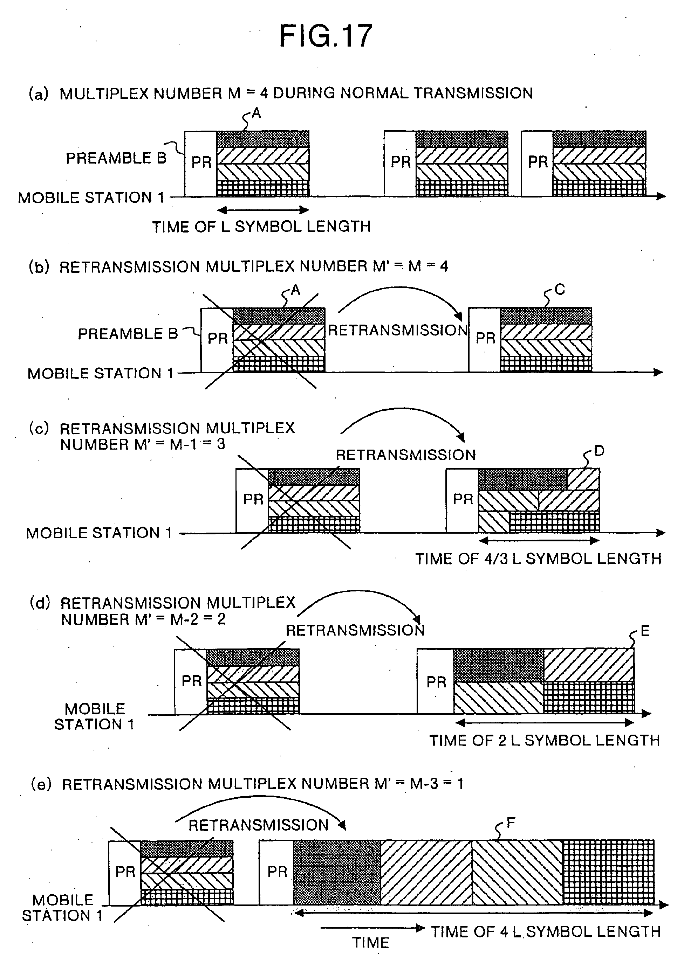

Fig. 17 is a diagram showing an example of a multi-code transmission using a conventional mobile communication terminal. Fig. 17 (a) shows a normal transmission when a multiplex number M = 4. Fig. 17 (b) shows a retransmission when a retransmission multiplex number M' = 4 (M = 4). Fig. 17 (c) shows a retransmission when a retransmission multiplex number M' = 3 (M = 4). Fig. 17 (d) shows a retransmission when a retransmission multiplex number M' = 2 (M = 4). Fig. 17 (e) shows a retransmission when a retransmission multiplex number M' = 1 (M = 4).

When a plurality of codes are used simultaneously in the normal transmission as shown in Fig. 17 (a) (corresponding to A), for example, it is possible to transmit one call information at a speed of a plurality of times faster than when this call information is transmitted by one channel. When the retransmission multiplex number M' = 4 as shown in Fig. 17 (b), one call information uses four codes at the same time (corresponding to C). In this case, it is possible to transmit the call information at a speed four times faster than when this call information is transmitted using one channel as shown in Fig. 17 (e) (corresponding to F). When the retransmission multiplex number M' = 3 as shown in Fig. 17 (c), one call information uses three codes at the same time (corresponding to D). In this case, it is possible to transmit the call information at a speed three times faster than when this call information is transmitted using one channel as shown in Fig. 17 (e) (corresponding to F). When the retransmission multiplex number M' = 2 as shown in Fig. 17 (d), one call information uses two codes at the same time (corresponding to E). In this case, it is possible to transmit the call information at a speed two times faster than when this call information is transmitted using one channel as shown in Fig. 17 (e) (corresponding to F). In Figs. 17 (a) to (e), portions denoted by PR are preambles B. The PR is a signal having a constant length consisting of a clock synchronization signal that is necessary for a demodulation processing, for example.

Sometimes codes that have been allocated to terminals cannot achieve a state that the codes are completely orthogonal with each other. Therefore, when the number of terminals used for simultaneous transmission increases, interference corresponding to this mutual relationship occurs. As a result, a data error occurs in the reception packet. When data errors as shown in Figs. 17 (b), (c), (d) and (e) (corresponding to an X mark in the drawings) have occurred, each mobile communication terminal carries out a packet transmission (retransmission) with a random time interval. Based on this, each mobile communication terminal can avoid a collision with high probability, so that a plurality of mobile communication terminal can share one radio channel.

Thus, according to a conventional practice, there has been proposed a retransmission method in which the retransmission multiplex number M' is set to a smaller value than the multiplex number M during a normal transmission, in the multi-code transmission. In the case of carrying out a multi-code transmission, a packet signal length becomes 1/multiplex number when the same volume of information is transmitted without carrying out a multiplexing. In this case, total power after the multiplexing is set constant regardless of the multiplex number.

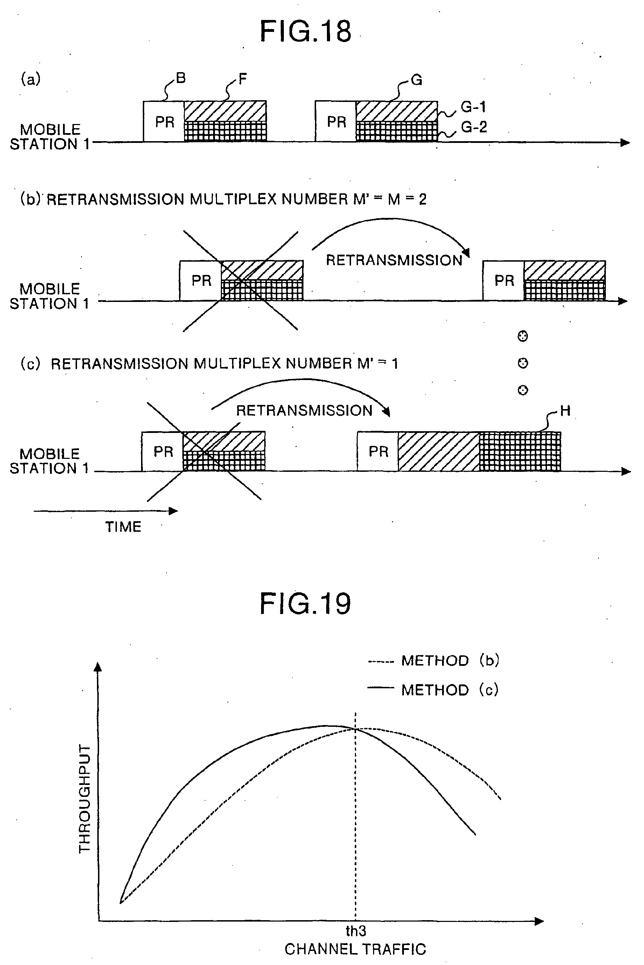

Fig. 18 is a diagram showing an example of a multi-code transmission in the conventional mobile communication terminal disclosed in Japanese Patent Application Laid-Open (JP-A) No. 10-233758. Specifically, Fig. 18 (a) shows a case in which the multiplex number during a normal transmission is set as M = 2 (corresponding to G-1 and G-2 in Fig. 18 (a)). When a transmission error has occurred (corresponding to an X mark), this mobile communication terminal carries out a packet transmission again with a random time interval, in a similar manner to that as described above. For example, Fig. 18 (b) and (c) show two kinds of retransmission methods in multi-code transmission: a method (b) of carrying out two multiplex transmission during both the normal transmission and the retransmission, and a method (c) of not carrying out a multiplexing during the retransmission.

Fig. 19 is a diagram showing a simplified state of the diagrams shown in Japanese Patent Application Laid-Open (JP-A) No. 10-233758. Throughput characteristics of the two kinds of packet retransmission methods shown in Figs. 18 (b) and (c). In Fig. 19, throughput in the vertical axis shows a product of an average traffic and a packet success probability. When the throughput is larger, it is possible to transmit more information. In other words, when the throughput is larger, it is possible to accommodate more users. On the other hand, the channel traffic in the horizontal axis shows an average number of terminals during a transmission to a radio channel (a call volume including retransmission). Fig. 19, a dotted line and a solid line show the throughput characteristics of Figs. 18 (b) and (c) respectively. According to the conventional retransmission control method, it has been possible to obtain the throughput shown in Fig. 19 by carrying out the controls shown in Figs. 18 (b) and (c) respectively.

According to the conventional retransmission control method, when the channel traffic is small as shown in Fig. 18, that is, when the channel traffic is smaller than a threshold value th3, it is possible to obtain optimum throughput by the control of (c). On the other hand, when the channel traffic is relatively large, that is, when the channel traffic is larger than the threshold value th3, it is possible to obtain optimum throughput by the control of (b). As explained above, according to the conventional retransmission control method, there has been a problem in that in order to obtain always-optimum throughput, it is necessary to select a retransmission method of either (b) or (c) based on the channel traffic. Further, there has been a problem that it is impossible to accurately measure channel traffic in the actual devices because of the interference and others.

It is an object of the present invention to provide a mobile communication system, a base station, a mobile communication terminal, and a retransmission control method, capable of obtaining always optimum throughput under the existence of any channel traffic.

### DISCLOSURE OF INVENTION

In order to achieve the above object, according to a first aspect of the present invention, there is provided a mobile communication system for carrying out a packet transmission based on the spread ALOHA system, the mobile communication system comprising: a base station (corresponding to a base station 2 in an embodiment to be described later) that measures an uplink interference value of a transmission path when a data error has occurred in reception packets multiplexed by plurality, generates a retransmission request signal of a packet format based on the measured uplink interference value, and then transmits the retransmission request signal to a mobile communication terminal that has transmitted the erroneous packet; and a mobile communication terminal (corresponding to a mobile station 1) that outputs multiplexed transmission data as a transmission packet during a normal transmission, automatically divides the transmission data into parallel signals according to a retransmission multiplex number based on the retransmission request signal when the retransmission request signal has been received, further multiplexes the parallel signals to generate a transmission packet for retransmission, and outputs the transmission packet to the base station.

According to the above aspect, a retransmission multiplex number is determined based on a measured uplink interference value. Therefore, it is possible to change the multiplex number at the retransmission time according to the uplink interference value. Further, it is possible to obtain a mobile communication system capable of obtaining optimum throughput under the existence of any channel traffic.

Further, according to a second aspect of the invention, there is provided a mobile communication system of the above aspect, wherein the base station generates a retransmission request signal of a packet data format including the uplink interference value, and transmits the retransmission request signal to the mobile communication terminal that has transmitted the erroneous packet, and the mobile communication terminal extracts the uplink interference value from the received retransmission request signal, compares the uplink interference value with a predetermined threshold value having a plurality of stages, and determines a retransmission multiplex number according to the uplink interference value based on a result of this comparison.

According to the above aspect, the mobile communication terminal compares the uplink interference value with a predetermined threshold value having a plurality of stages based on the uplink interference value measured by the base station, and determines a retransmission multiplex number according to the uplink interference value.

Further, according to a third aspect of the invention, there is provided a mobile communication system of the above aspect, wherein the base station generates a retransmission request signal of a packet data format including the uplink interference value, and transmits the retransmission request signal to the mobile communication terminal that has transmitted the erroneous packet, and the mobile communication terminal extracts the uplink interference value from the received retransmission request signal, compares the uplink interference value with a predetermined threshold value, does not multiplex the retransmission data when the uplink interference value is lower than the threshold value, and determines a retransmission multiplex number to be in the same number as the multiplex number during a normal transmission when the uplink interference value is equal to or higher than the threshold value.

According to the above aspect, the mobile communication terminal compares the uplink interference value with a predetermined threshold value based on the uplink interference value measured by the base station, and determines whether the retransmission data is to be multiplexed or not based on a result of this comparison.

Further, according to a fourth aspect of the invention, there is provided a mobile communication system of the above aspect, wherein the base station generates a retransmission request signal of a packet data format including the uplink interference value, and transmits the retransmission request signal to the mobile communication terminal that has transmitted the erroneous packet, and the mobile communication terminal extracts the uplink interference value from the received retransmission request signal, obtains a probability for determining a retransmission multiplex number based on the uplink interference value, generates a random number of 0 or 1 based on this probability, does not multiplex the retransmission data when the random number is 0, and determines a retransmission multiplex number to be in the same number as the multiplex number during a normal transmission when the random number is 1.

According to the above aspect, the mobile communication terminal obtains a probability for determining a retransmission multiplex number based on the uplink interference value measured by the base station, and determines the retransmission multiplex number based on this probability.

Further, according to a fifth aspect of the invention, there is provided a mobile communication system of the above aspect, wherein the base station compares the uplink interference value with a predetermined threshold value having a plurality of stages, determines a retransmission multiplex number according to the uplink interference value based on a result of this comparison, generates a retransmission request signal of a packet data format including the retransmission multiplex number, and transmits the retransmission request signal to the mobile communication terminal that has transmitted the erroneous packet, and the mobile communication terminal extracts the retransmission multiplex number from the received retransmission request signal, and retransmits the transmission data according to the retransmission multiplex number.

According to the above aspect, the base station compares the measured uplink interference value with a predetermined threshold value having a plurality of stages, and determines a retransmission multiplex number according to the uplink interference value based on a result of this comparison. The mobile communication terminal retransmits the transmission data based on the received retransmission multiplex number.

Further, according to a sixth aspect of the invention, there is provided a mobile communication system of the above aspect, wherein the base station compares the uplink interference value with a predetermined threshold value, does not multiplex the retransmission data when the uplink interference value is lower than the threshold value, determines a retransmission multiplex number to be in the same number as the multiplex number during a normal transmission when the uplink interference value is equal to or higher than the threshold value, generates a retransmission request signal of a packet data format including the retransmission multiplex number, and transmits the retransmission request signal to the mobile communication terminal that has transmitted the erroneous packet, and the mobile communication terminal extracts the retransmission multiplex number from the received retransmission request signal, and retransmits the transmission data according to the retransmission multiplex number.

According to the above aspect, the base station compares the measured uplink interference value with a predetermined threshold value, and determines whether the retransmission data is to be multiplexed or not based on a result of this comparison. The mobile communication terminal retransmits the transmission data based on the received retransmission multiplex number information.

Further, according to a seventh aspect of the invention, there is provided a mobile communication system of the above aspect, wherein the base station obtains a probability for determining a retransmission multiplex number based on the measured uplink interference value, generates a random number of 0 or 1 based on this probability, does not multiplex the retransmission data when the random number is 0, determines a retransmission multiplex number to be in the same number as the multiplex number during a normal transmission when the random number is 1, generates a retransmission request signal of a packet data format including the retransmission multiplex number, and transmits the retransmission request signal to the mobile communication terminal that has transmitted the erroneous packet, and the mobile communication terminal extracts the retransmission multiplex number from the received retransmission request signal, and retransmits the transmission data according to the retransmission multiplex number.

According to the above aspect, the base station obtains a probability for determining a retransmission multiplex number based on the measured uplink interference value, determines a retransmission multiplex number based on this probability, and determines a retransmission multiplex number according to the measured uplink interference value. The mobile communication terminal retransmits the transmission data based on the received retransmission multiplex number information.

Further, according to an eighth aspect of the invention, there is provided a mobile communication system of the above aspect, wherein the base station obtains a probability for determining a retransmission multiplex number based on the measured uplink interference value, generates a retransmission request signal of a packet data format including the probability, and transmits the retransmission request signal to the mobile communication terminal that has transmitted the erroneous packet, and the mobile communication terminal extracts the probability from the received retransmission request signal, generates a random number of 0 or 1 based on this probability, does not multiplex the retransmission data when the random number is 0, and determines a retransmission multiplex number to be in the same number as the multiplex number during a normal transmission when the random number is 1.

According to the above aspect, the base station obtains a probability for determining a retransmission multiplex number based on the measured uplink interference value. The mobile communication terminal determines a retransmission multiplex number based on the received probability information, and retransmits the transmission data.

Further, according to a ninth aspect of the present invention, there is provided a base station for carrying out a packet transmission based on the spread ALOHA system, wherein the base station measures an uplink interference value of a transmission path when a data error has occurred in reception packets multiplexed by plurality, generates a retransmission request signal of a packet format based on the measured uplink interference value, and then transmits the retransmission request signal to a mobile communication terminal that has transmitted the erroneous packet.

According to the above aspect, a retransmission multiplex number is determined based on a measured uplink interference value. Therefore, it is possible to change the multiplex number at the retransmission time according to the uplink interference value.

Further, according to a tenth aspect of the present invention, there is provided a base station of the above aspect, the base station comprising: a data detecting unit (corresponding to spectrum despreading demodulators 22-1 to 22-J, demodulators 23-1 to 23-J, and a data detector 24) that despreads and demodulates the received packet, extracts user data from a demodulated data signal thereby to always monitor a data error in the reception packets, and measures an uplink interference value when there has been a data error; a retransmission request generating unit (corresponding to a traffic control signal generator 25) that generates a retransmission request signal based on the measured uplink interference value; and a transmitting unit (corresponding to a spectrum spreading modulator 26, a carrier generator 27, and a transmitter 28) that converts the retransmission request signal into a packet format, and outputs the retransmission request signal in the packet format.

According to the above aspect, the base station transmits a retransmission request signal including a measured uplink interference value to a mobile communication terminal. Therefore, it is possible to omit the arithmetic processing for determining a retransmission multiplex number at the base station, which can simplify the structure of the apparatus.

Further, according to an eleventh aspect of the invention, there is provided a base station of the above aspect, wherein the base station generates a retransmission request signal of a packet data format including the uplink interference value, and transmits the retransmission request signal to the mobile communication terminal that has transmitted the erroneous packet.

According to the above aspect, the mobile communication terminal determines a retransmission multiplex number based on the uplink interference value measured by the base station.

Further, according to a twelfth aspect of the invention, there is provided a base station of the above aspect, wherein the base station compares the uplink interference value with a predetermined threshold value having a plurality of stages, determines a retransmission multiplex number according to the uplink interference value based on a result of this comparison, generates a retransmission request signal of a packet data format including the retransmission multiplex number, and transmits the retransmission request signal to the mobile communication terminal that has transmitted the erroneous packet.

According to the above aspect, the base station compares the measured uplink interference value with a predetermined threshold value having a plurality of stages, and determines a retransmission multiplex number according to the uplink interference value based on a result of this comparison. The mobile communication terminal retransmits the transmission data based on the received retransmission multiplex number.

Further, according to a thirteenth aspect of the invention, there is provided a base station of the above aspect, wherein the base station compares the uplink interference value with a predetermined threshold value, does not multiplex the retransmission data when the uplink interference value is lower than the threshold value, determines a retransmission multiplex number to be in the same number as the multiplex number during a normal transmission when the uplink interference value is equal to or higher than the threshold value, generates a retransmission request signal of a packet data format including the retransmission multiplex number, and transmits the retransmission request signal to the mobile communication terminal that has transmitted the erroneous packet.

According to the above aspect, the base station compares the measured uplink interference value with a predetermined threshold value, and determines whether the retransmission data is to be multiplexed or not based on a result of this comparison. The mobile communication terminal retransmits the transmission data based on the received retransmission multiplex number.

Further, according to a fourteenth aspect of the invention, there is provided a base station of the above aspect, wherein the base station obtains a probability for determining a retransmission multiplex number based on the measured uplink interference value, generates a random number of 0 or 1 based on this probability, does not multiplex the retransmission data when the random number is 0, determines a retransmission multiplex number to be in the same number as the multiplex number during a normal transmission when the random number is 1, generates a retransmission request signal of a packet data format including the retransmission multiplex number, and transmits the retransmission request signal to the mobile communication terminal that has transmitted the erroneous packet.

According to the above aspect, the base station obtains a probability for determining a retransmission multiplex number based on the measured uplink interference value, determines a retransmission multiplex number based on this probability, and determines a retransmission multiplex number according to the measured uplink interference value. The mobile communication terminal retransmits the transmission data based on the received retransmission multiplex number information.

Further, according to a fifteenth aspect of the invention, there is provided a base station of the above aspect, wherein the base station obtains a probability for determining a retransmission multiplex number based on the measured uplink interference value, generates a retransmission request signal of a packet data format including the probability, and transmits the retransmission request signal to the mobile communication terminal that has transmitted the erroneous packet.

According to the above aspect, the base station obtains a probability for determining a retransmission multiplex number based on the measured uplink interference value. The mobile communication terminal determines a retransmission multiplex number based on the received probability information, and retransmits the transmission data.

Further, according to a sixteenth aspect of the invention, there is provided a mobile communication terminal for carrying out a packet transmission based on the spread ALOHA system, wherein the mobile communication terminal outputs multiplexed transmission data as a transmission packet during a normal transmission, automatically divides the transmission data into parallel signals according to a retransmission multiplex number determined based on the retransmission request signal when the retransmission request signal has been received, further multiplexes the parallel signals to generate a transmission packet for retransmission, and outputs the transmission packet to the base station.

According to the above aspect, a retransmission multiplex number is determined based on a measured uplink interference value. Therefore, it is possible to obtain the mobile communication terminal capable of changing the multiplex number at the retransmission time according to the uplink interference value.

Further, according to a seventeenth aspect of the invention, there is provided a mobile communication terminal of the above aspect, the mobile communication terminal comprising: a series-parallel converting unit (corresponding to a deserializer 4) that converts the internally generated transmission data into parallel signals according to a predetermined multiplex number; a transmitting unit (corresponding to spectrum spreading modulators 7-1 to 7-M, an adder 8, a carrier generator 9, and a transmitter 10) that spreading modulates the plurality of parallel signals, multiplexes the modulation signals by a predetermined method, and outputs the multiplexed modulation signals as a transmission packet; a retransmission request detecting unit (corresponding to an spectrum despreading demodulator 13, a demodulator 14, and a data detector 15) that receives a retransmission request signal in the packet format, and despreads and demodulates this signal thereby to detect the retransmission request signal; and a control unit (corresponding to a control section 16) that decides a multiplex number of the parallel signals used by the series-parallel converting unit, based on the retransmission request signal.

According to the above aspect, the mobile communication terminal that has received a retransmission request signal determines a multiplex number based on this signal, automatically converts the transmission data into parallel signals, and then multiplexes the parallel signals. Based on this arrangement, it is possible to take a plurality of values for the multiplex number at the mobile communication terminal. Further, it is not necessary to change over the series-parallel converting unit by a changeover switch or the like when the multiplex number is changed over. Therefore, it is possible to simplify the structure of the apparatus.

Further, according to an eighteenth aspect of the invention, there is provided a mobile communication terminal of the above aspect, wherein the mobile communication terminal extracts an uplink interference value from the received retransmission request signal, compares this uplink interference value with a predetermined threshold value having a plurality of stages, and determines the retransmission multiplex number according to the uplink interference value based on a result of this comparison.

According to the above aspect, the mobile communication terminal compares the uplink interference value with a predetermined threshold value having a plurality of stages, and determines the retransmission multiplex number according to the uplink interference value based on a result of this comparison.

Further, according to a nineteenth aspect of the invention, there is provided a mobile communication terminal of the above aspect, wherein the mobile communication terminal extracts the uplink interference value from the received retransmission request signal, compares the uplink interference value with a predetermined threshold value, does not multiplex the retransmission data when the uplink interference value is lower than the threshold value, and determines a retransmission multiplex number to be in the same number as the multiplex number during a normal transmission when the uplink interference value is equal to or higher than the threshold value.

According to the above aspect, the mobile communication terminal compares the uplink interference value with a predetermined threshold value based on the uplink interference value measured by the base station, and determines whether the retransmission data is to be multiplexed or not based on a result of this comparison.

Further, according to a twentieth aspect of the invention, there is provided a mobile communication terminal of the above aspect, wherein the mobile communication terminal extracts the uplink interference value from the received retransmission request signal, obtains a probability for determining a retransmission multiplex number based on the uplink interference value, generates a random number of 0 or 1 based on this probability, does not multiplex the retransmission data when the random number is 0, and determines a retransmission multiplex number to be in the same number as the multiplex number during a normal transmission when the random number is 1.

According to the above aspect, the mobile communication terminal obtains a probability for determining a retransmission multiplex number based on the uplink interference value measured by the base station, and determines the retransmission multiplex number based on this probability.

Further, according to a twenty-first aspect of the invention, there is provided a mobile communication terminal of the above aspect, wherein the mobile communication terminal extracts the retransmission multiplex number from the received retransmission request signal, and retransmits the transmission data according to the retransmission multiplex number.

According to the above aspect, the base station determines a retransmission multiplex number based on a measured uplink interference value, and the mobile communication terminal carries out a retransmission based on the determined retransmission multiplex number.

Further, according to an twenty-second aspect of the invention, there is provided a mobile communication terminal of the above aspect, wherein the mobile communication terminal extracts the probability from the received retransmission request signal, generates a random number of 0 or 1 based on this probability, does not multiplex the retransmission data when the random number is 0, and determines a retransmission multiplex number to be in the same number as the multiplex number during a normal transmission when the random number is 1.

According to the above aspect, the base station obtains a probability for determining a retransmission multiplex number based on the measured uplink interference value. The mobile communication terminal determines a retransmission multiplex number based on the received probability information, and retransmits the transmission data.

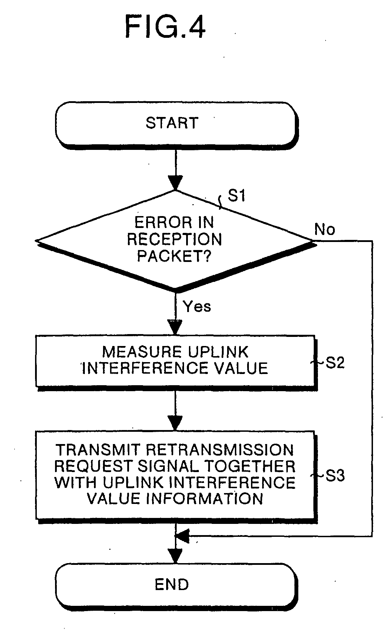

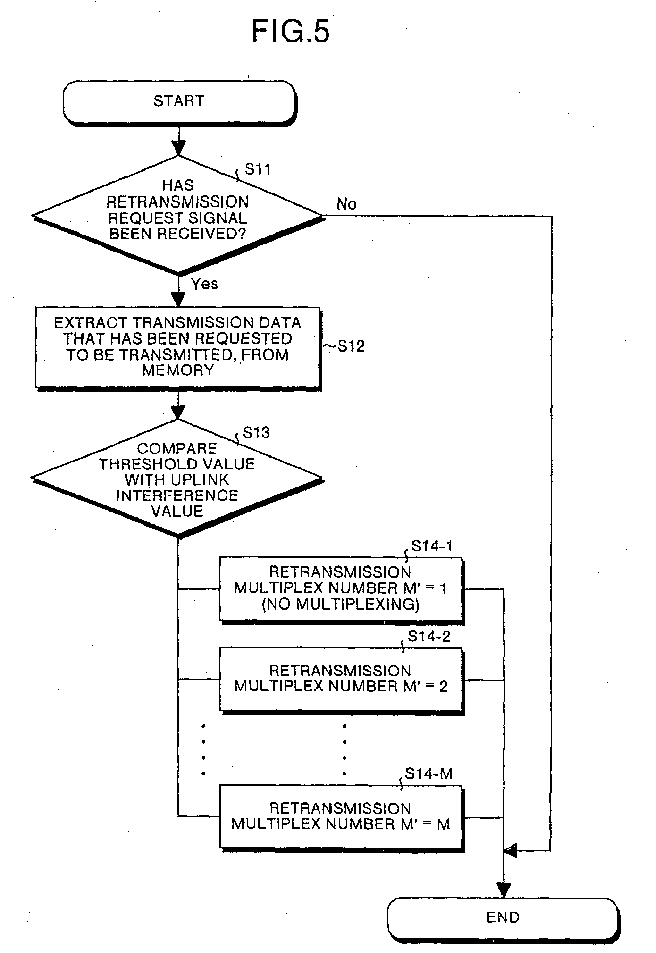

Further, according to a twenty-third aspect of the present invention, there is provided a retransmission control method for controlling a retransmission between a mobile communication terminal and a base station in a mobile communication system for carrying out a packet transmission based on the spread ALOHA system, the retransmission control method comprising: a retransmission request signal transmission step (corresponding to Fig. 4, Fig. 11, Fig. 13, Fig. 14, and Fig. 15) of measuring an uplink interference value of a transmission path when a data error has occurred in reception packets multiplexed by plurality, generating a retransmission request signal of a packet format based on the measured uplink interference value, and then transmitting the retransmission request signal to a mobile communication terminal that has transmitted the erroneous packet; and a retransmission step (corresponding to Fig. 5, Fig. 7, Fig. 9, Fig. 12, and Fig. 16) of automatically dividing the transmission data into parallel signals according to a retransmission multiplex number based on the retransmission request signal when the retransmission request signal has been received, further multiplexing the parallel signals to generate a transmission packet for retransmission, and outputting the transmission packet to the base station.

According to the above aspect, a retransmission multiplex number is determined based on a measured uplink interference value. Therefore, it is possible to change the multiplex number at the retransmission time according to the uplink interference value. Further, it is possible to obtain a retransmission control method capable of obtaining optimum throughput under the existence of any channel traffic.

Further, according to a twenty-fourth aspect of the invention, there is provided a retransmission control method of the above aspect, wherein the retransmission request signal transmission step is for generating a retransmission request signal of a packet data format including the uplink interference value, and transmitting the retransmission request signal to the mobile communication terminal that has transmitted the erroneous packet (corresponding to Fig. 4), and the retransmission step is for extracting the uplink interference value from the received retransmission request signal, comparing the uplink interference value with a predetermined threshold value having a plurality of stages, and determining a retransmission multiplex number according to the uplink interference value based on a result of this comparison (corresponding to Fig. 5).

According to the above aspect, at the retransmission step, the uplink interference value is compared with a predetermined threshold value having a plurality of stages. A retransmission multiplex number is determined according to the uplink interference value, based on the uplink interference value measured at the retransmission request signal transmission step.

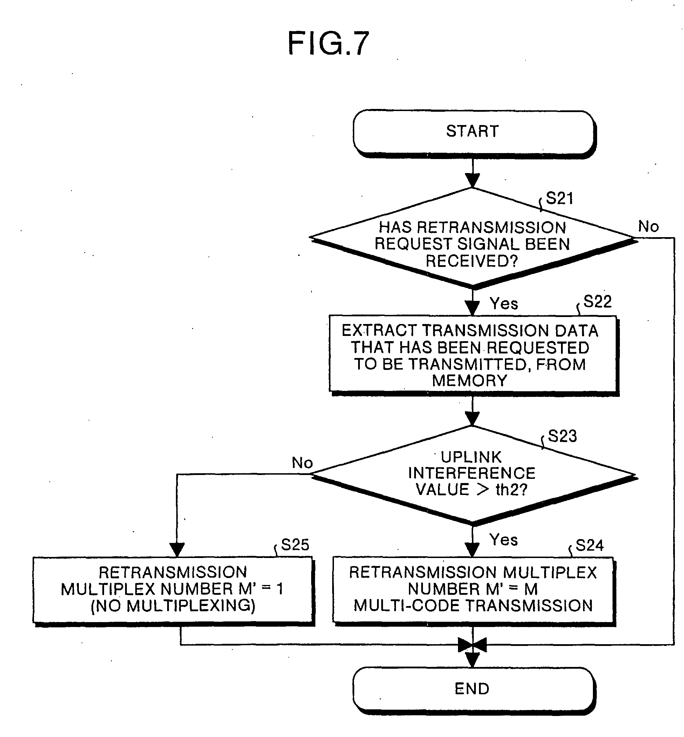

Further, according to a twenty-fifth aspect of the invention, there is provided a retransmission control method of the above aspect, wherein the retransmission request signal transmission step is for generating a retransmission request signal of a packet data format including the uplink interference value, and transmitting the retransmission request signal to the mobile communication terminal that has transmitted the erroneous packet (corresponding to Fig. 4), and the retransmission step is for extracting the uplink interference value from the received retransmission request signal, comparing the uplink interference value with a predetermined threshold value, not multiplexing the retransmission data when the uplink interference value is lower than the threshold value, and determining a retransmission multiplex number to be in the same number as the multiplex number during a normal transmission when the uplink interference value is equal to or higher than the threshold value (corresponding to Fig. 7).

According to the above aspect, at the retransmission step, the uplink interference value is compared with a predetermined threshold value and it is determined whether the retransmission data is to be multiplexed or not, based on the uplink interference value measured at the retransmission request signal transmission step.

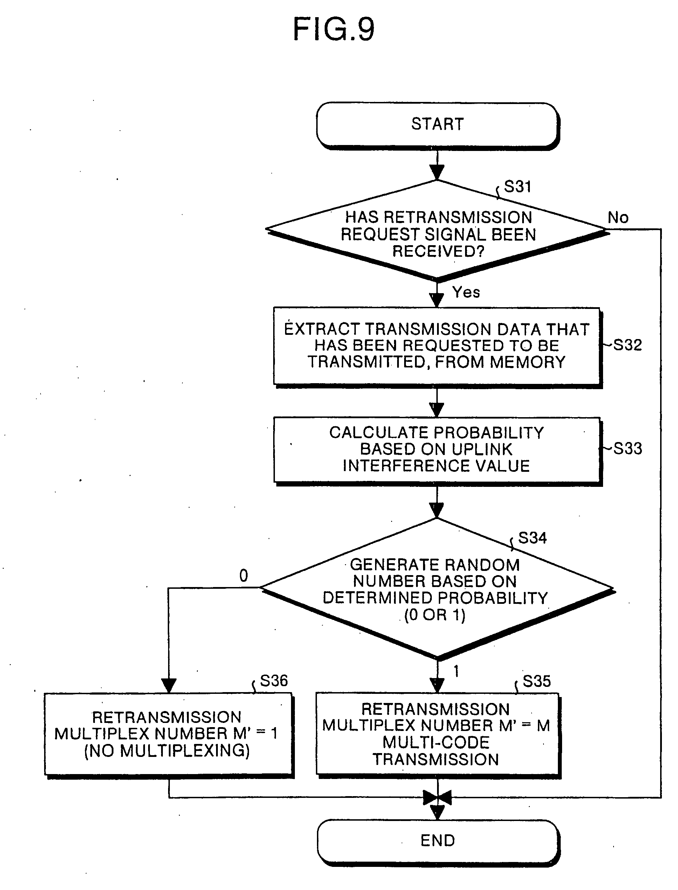

Further, according to a twenty-sixth aspect of the invention, there is provided a retransmission control method of the above aspect, whereinthe retransmission request signal transmission step is for generating a retransmission request signal of a packet data format including the uplink interference value, and transmitting the retransmission request signal to the mobile communication terminal that has transmitted the erroneous packet (corresponding to Fig. 4), and the retransmission step is for extracting the uplink interference value from the received retransmission request signal, obtaining a probability for determining a retransmission multiplex number based on the uplink interference value, generating a random number of 0 or 1 based on this probability, not multiplexing the retransmission data when the random number is 0, and determining a retransmission multiplex number to be in the same number as the multiplex number during a normal transmission when the random number is 1 (corresponding to Fig. 9).

According to the above aspect, at the retransmission step, a probability for determining a retransmission multiplex number is obtained and the retransmission multiplex number is determined using this probability, based on the uplink interference value measured by the base station.

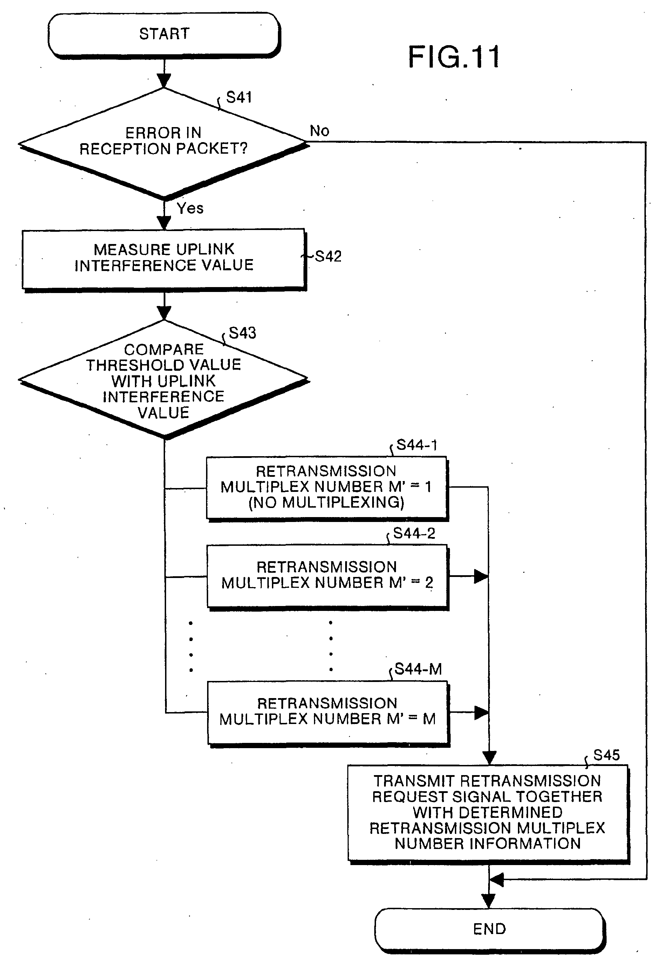

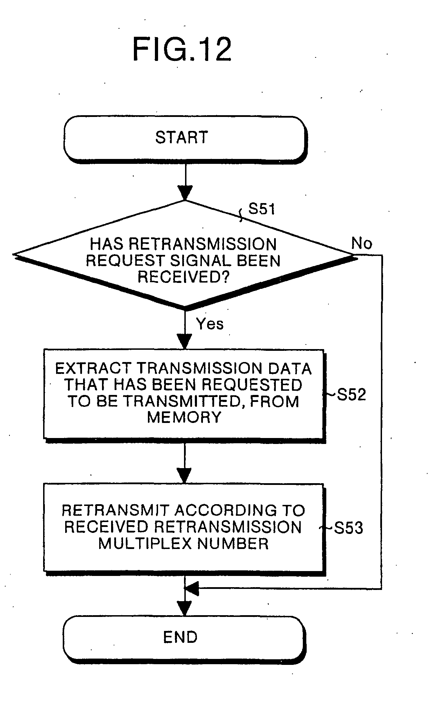

Further, according to a twenty-seventh aspect of the invention, there is provided a retransmission control method of the above aspect, wherein the retransmission request signal transmission step is for comparing the uplink interference value with a predetermined threshold value having a plurality of stages, determining a retransmission multiplex number according to the uplink interference value based on a result of this comparison, generating a retransmission request signal of a packet data format including the retransmission multiplex number, and transmitting the retransmission request signal to the mobile communication terminal that has transmitted the erroneous packet (corresponding to Fig. 11), and the retransmission step is for extracting the retransmission multiplex number from the received retransmission request signal, and retransferring the transmission data according to the retransmission multiplex number (corresponding to Fig. 12).

According to the above aspect, at the retransmission request signal transmission step, the measured uplink interference value is compared with a predetermined threshold value having a plurality of stages, and a retransmission multiplex number according to the uplink interference value is determined based on a result of this comparison. At the retransmission step, the transmission data is retransmitted based on the received retransmission multiplex number.

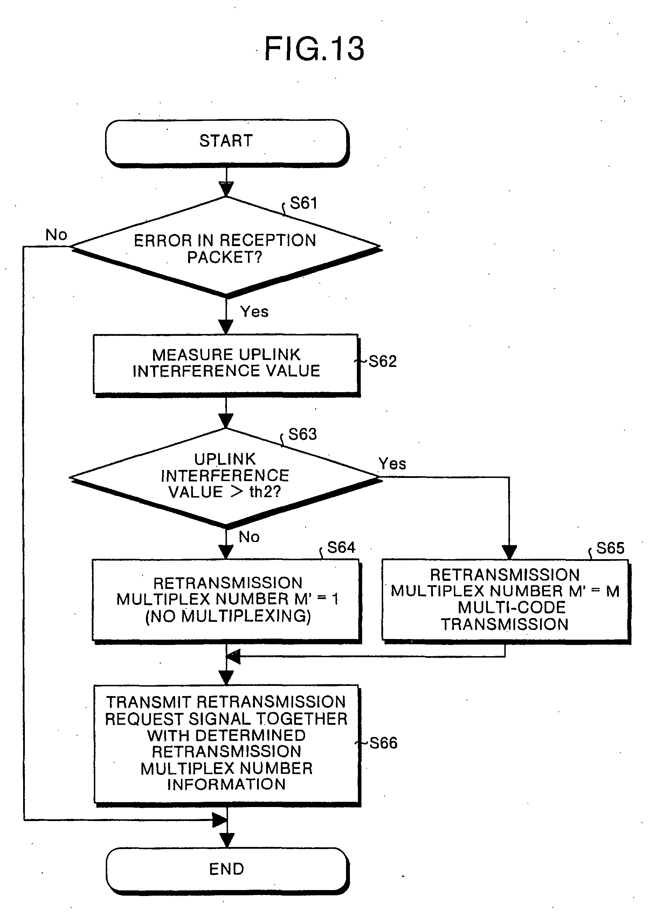

Further, according to a twenty-eighth aspect of the invention, there is provided a retransmission control method of the above aspect, whereinthe retransmission request signal transmission step is for comparing the uplink interference value with a predetermined threshold value, not multiplexing the retransmission data when the uplink interference value is lower than the threshold value, determining a retransmission multiplex number to be in the same number as the multiplex number during a normal transmission when the uplink interference value is equal to or higher than the threshold value, generating a retransmission request signal of a packet data format including the retransmission multiplex number, and transmitting the retransmission request signal to the mobile communication terminal that has transmitted the erroneous packet (corresponding to Fig. 13), and the retransmission step is for extracting the retransmission multiplex number from the received retransmission request signal, and retransferring the transmission data according to the retransmission multiplex number (corresponding to Fig. 12).

According to the above aspect, at the retransmission request signal transmission step, the measured uplink interference value is compared with a predetermined threshold value, and whether the retransmission data is to be multiplexed or not is determined based on a result of this comparison. At the retransmission step, the transmission data is retransmitted based on the received retransmission multiplex number information.

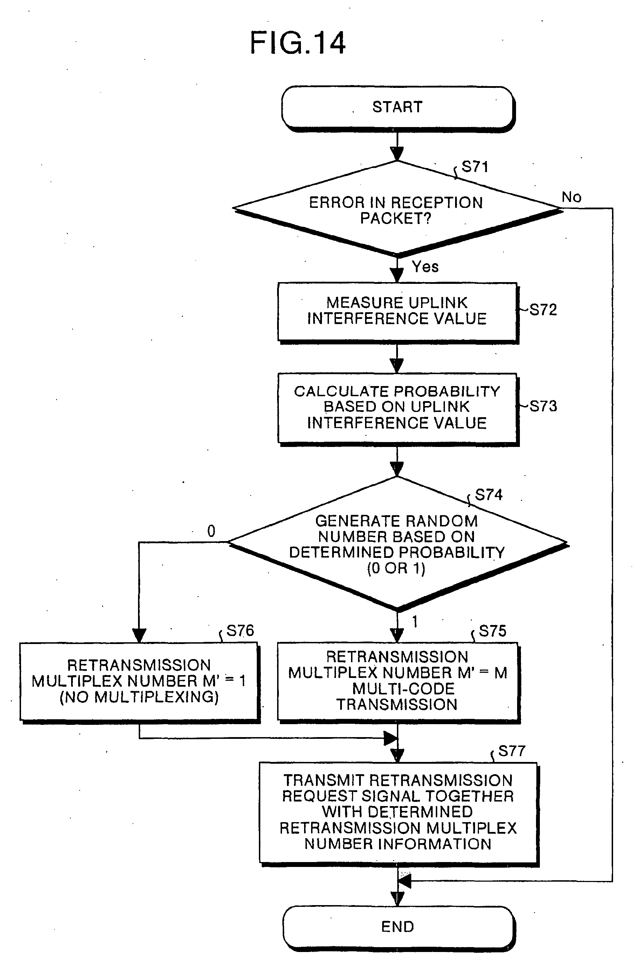

Further, according to a twenty-ninth aspect of the invention, there is provided a retransmission control method of the above aspect, wherein the retransmission request signal transmission step is for obtaining a probability for determining a retransmission multiplex number based on the measured uplink interference value, generating a random number of 0 or 1 based on this probability, not multiplexing the retransmission data when the random number is 0, determining a retransmission multiplex number to be in the same number as the multiplex number during a normal transmission when the random number is 1, generating a retransmission request signal of a packet data format including the retransmission multiplex number, and transmitting the retransmission request signal to the mobile communication terminal that has transmitted the erroneous packet (corresponding to Fig. 14), and the retransmission step is for extracting the retransmission multiplex number from the received retransmission request signal, and retransferring the transmission data according to the retransmission multiplex number (corresponding to Fig. 12).

According to the above aspect, at the retransmission request signal transmission step, a probability for determining a retransmission multiplex number is obtained based on the measured uplink interference value, a retransmission multiplex number is determined based on this probability, and a retransmission multiplex number is determined according to the measured uplink interference value. At the retransmission step, the transmission data is retransmitted based on the received retransmission multiplex number information.

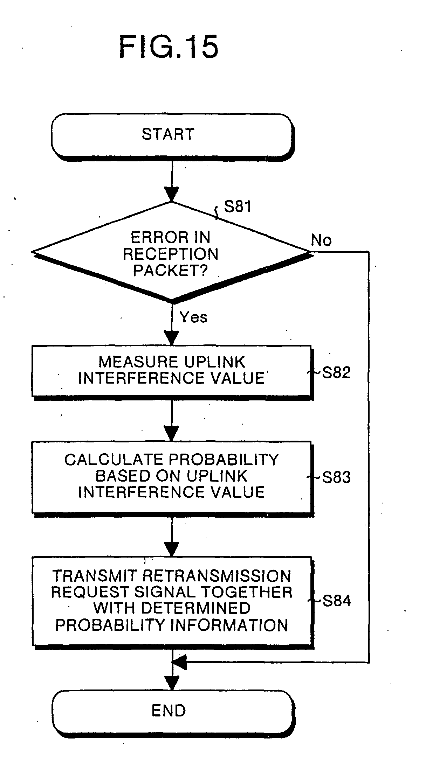

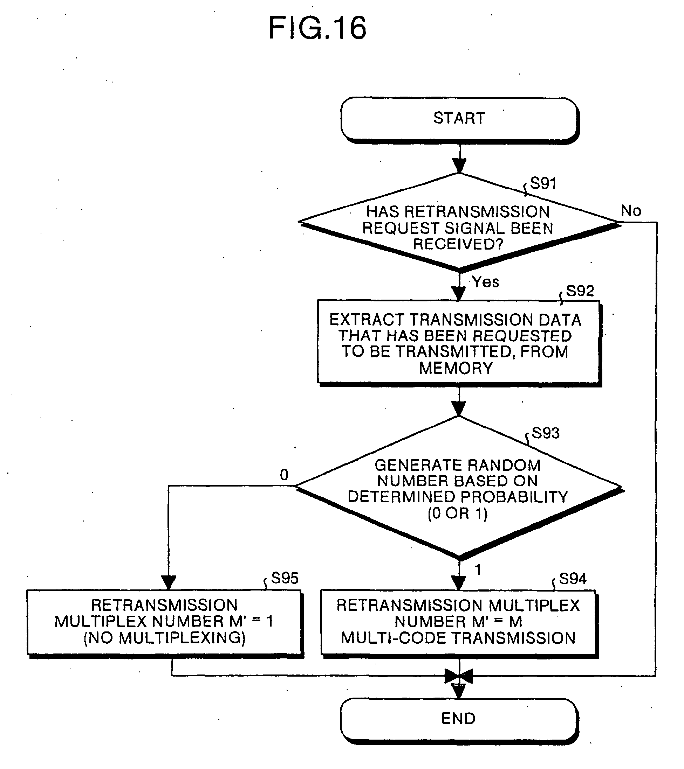

Further, according to a thirtieth aspect of the invention, there is provided a retransmission control method of the above aspect, wherein the retransmission request signal transmission step is for obtaining a probability for determining a retransmission multiplex number based on the measured uplink interference value, generating a retransmission request signal of a packet data format including the probability, and transmitting the retransmission request signal to the mobile communication terminal that has transmitted the erroneous packet (corresponding to Fig. 15), and the retransmission step is for extracting the probability from the received retransmission request signal, generating a random number of 0 or 1 based on this probability, not multiplexing the retransmission data when the random number is 0, and determining a retransmission multiplex number to be in the same number as the multiplex number during a normal transmission when the random number is 1 (corresponding to Fig. 16).

According to the above aspect, at the retransmission request signal transmission step, a probability for determining a retransmission multiplex number is obtained based on the measured uplink interference value. At the retransmission step, a retransmission multiplex number is determined based on the received probability information, and the transmission data is retransmitted.

### BRIEF DESCRIPTION OF DRAWINGS

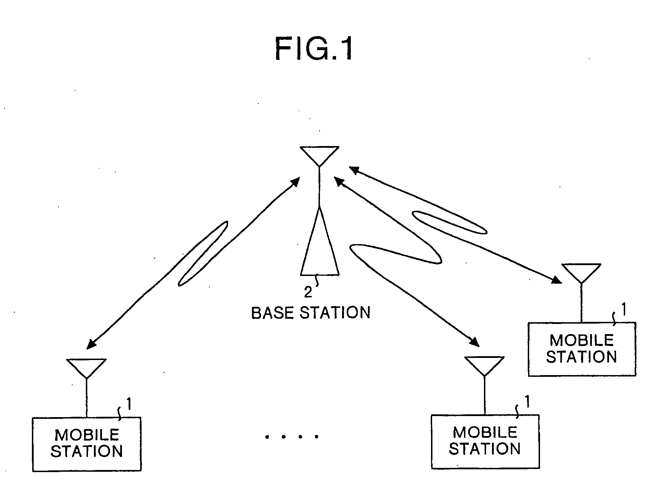

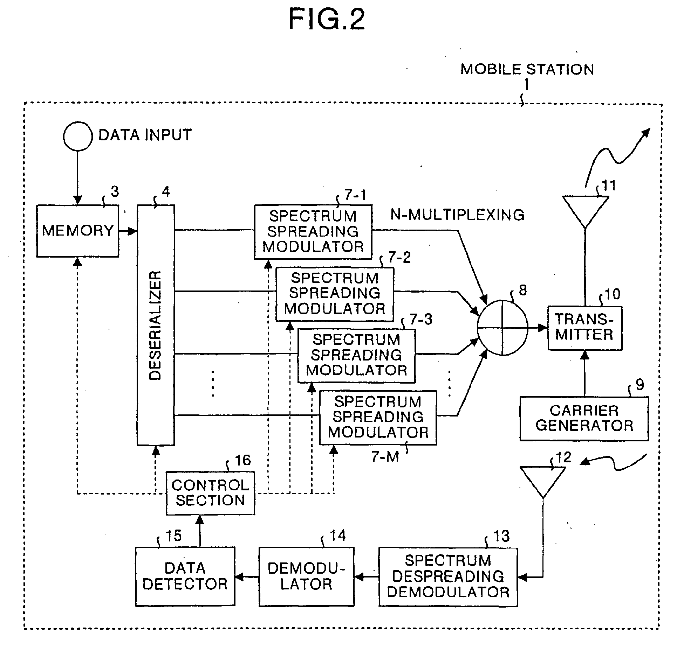

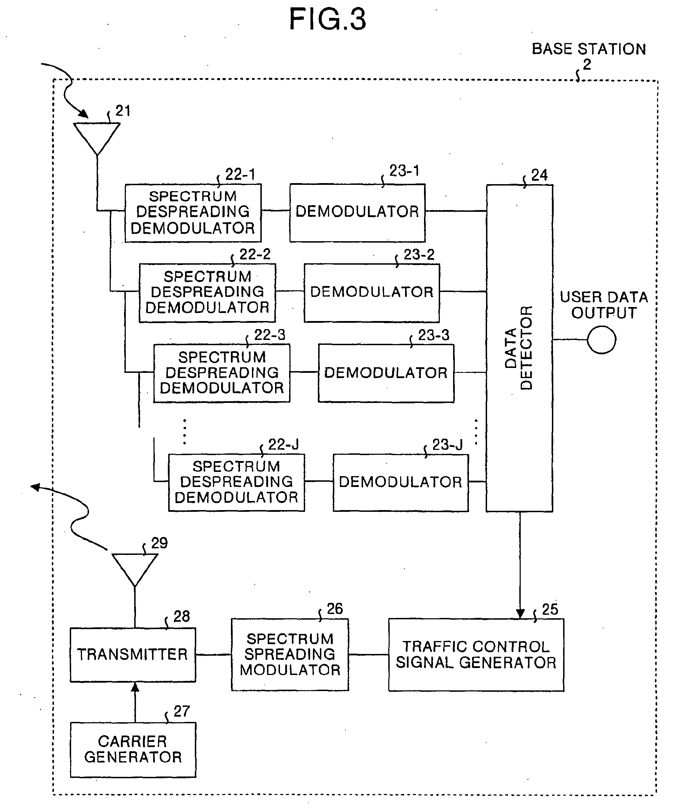

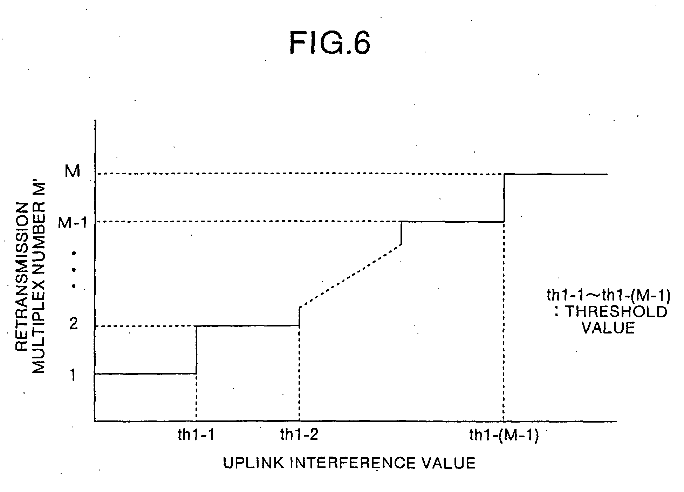

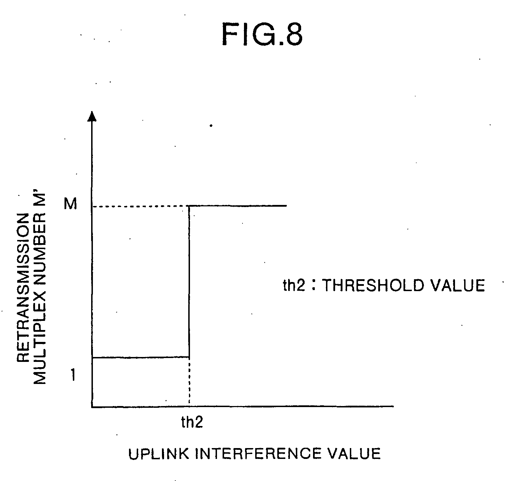

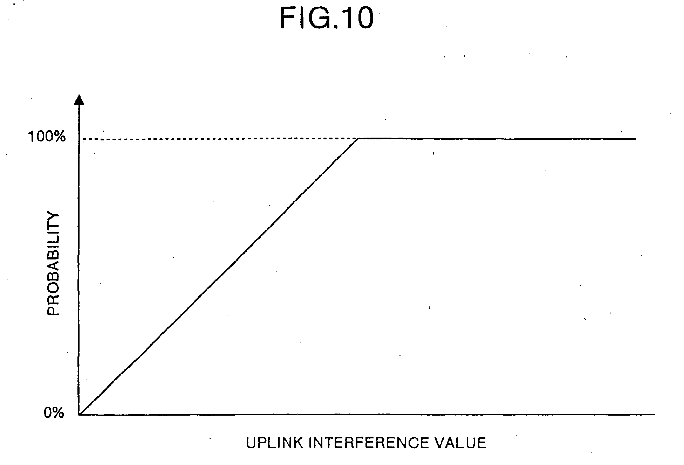

Fig. 1 is a diagram showing a structure of a mobile communication system relating to the present invention; Fig. 2 is a diagram showing an internal structure of a mobile station that constitutes a mobile communication system; Fig. 3 is a diagram showing an internal structure of a base station that constitutes a mobile communication system; Fig. 4. is an example of a flowchart showing a retransmission control method at a base station; Fig. 5 is an example of a flowchart showing a retransmission control method at a mobile station; Fig. 6 is a diagram showing an example of a relation ship between an uplink interference value and a retransmission multiplex number; Fig. 7 is an example of a flowchart showing a retransmission control method at a mobile station; Fig. 8 is a diagram showing an example of a relationship between an uplink interference value and a retransmission multiplex number; Fig. 9 is an example of a flowchart showing a retransmission control method at a mobile station; Fig. 10 is a diagram showing an example of a relationship between an uplink interference value and a probability; Fig. 11 is an example of a flowchart showing a retransmission control method at a base station; Fig. 12 is an example of a flowchart showing a retransmission control method at a mobile station; Fig. 13 is an example of a flowchart showing a retransmission control method at a base station; Fig. 14 is an example of a flowchart showing a retransmission control method at a base station; Fig. 15 is an example of a flowchart showing a retransmission control method at a base station; Fig. 16 is an example of a flowchart showing a retransmission control method at a mobile station; Fig. 17 is a diagram showing an example of a multi-code transmission at a conventional mobile communication terminal; Fig. 18 is a diagram showing an example of a multi-code transmission in the conventional mobile communication terminal disclosed in Japanese Patent ApplicationLaid-Open (JP-A) No. 10-233758; and Fig, 19 shows throughput characteristics of two kinds of packet retransmission methods shown in Figs. 18 (b) and (c).

### BEST MODE FOR CARRYING OUT THE INVENTION

Preferred embodiments of a mobile communication system, a base station, a mobile communication terminal, and a retransmission control method relating to the present invention will be explained in detail below with reference to the drawings. It should be noted that the present invention is not limited to these embodiments.

A first embodiment of the present invention will be explained first.

According to a radio communication that employs the CDMA (code division multiple access) system as a communication system, the information to be transmitted is diffused by different codes to channels so that the information on the plurality of channels can be multiplexed in the same frequency. There will be explained in detail below the operation of a mobile communication system for carrying out a multi-code transmission (multiple transmission) that is capable of achieving a high-speed transmission by utilizing this characteristic. In other words, a method for carrying out a high-speed transmission by allocating a plurality of codes (channels, codes) to one call will be explained below. By this method, the information can be transmitted faster than when the information is transmitted using one channel.

Fig. 1 is a diagram showing a structure of a mobile communication system relating to the present invention. In Fig. 1, a legend 2 denotes a base station, and 1 denotes k (where k is a natural number) mobile stations that are accommodated by this base station 2. According to the mobile communication system of the present invention, CDMA communication lines are set in two directions between the base station 2 and the mobile stations 1.

Fig. 2 is a diagram showing an internal structure of the mobile station 1 that constitutes the mobile communication system. In Fig. 2, legend 3 denotes a memory for temporarily storing data generated inside the mobile station 1. Legend 4 denotes a deserializer for extracting from the memory 3 data of an L symbol to be transmitted, and for variably converting the extracted data into parallel signals of M strings (where M is an integer of two or above). Legends 7-1, 7-2, 7-3, ..., and 7-M denote spectrum spreading modulators for generating diffusion codes mutually orthogonal with the M-string parallel signals, and for multiplying these signals by the parallel signals. Legend 8 denotes an adder for adding outputs of the spectrum spreading modulators 7-1 to 7-M, and 9 denotes a carrier generator for generating a carrier. Legend 10 denotes a transmitter for superimposing a carrier transmitted from the carrier generator 9 on an output of the adder 8, and for outputting a superimposed result from an antenna 11. Legend 12 denotes a reception antenna for receiving a retransmission request signal from the base station, and 13 denotes an spectrum despreading demodulator for inversely diffusing a modulation signal (a retransmission request signal) . Legend 14 denotes a demodulator for demodulating data from the signal that has passed through the spectrum despreading demodulator 13. Legend 15 denotes a data detector for extracting a retransmission request signal from the output of the demodulator 14. Legend 16 denotes a control section for extracting from the memory 3 the data which has been requested to be retransmitted based on a retransmission request signal obtained from the data detector 15, and for controlling the deserializer 4 and the spectrum spreading modulators 7-1 to 7-M.

Fig. 3 is a diagram showing an internal structure of the base station 2 that constitutes the mobile communication system. In Fig. 3, legend 21 denotes a reception antenna for receiving data from the mobile station 1. Legends 22-1, 22-2, 22-3, ..., and 22-J (where J is a value according to a number of users and.a multiplex number of one user) denote spectrum despreading demodulators for separating reception signals from a plurality of users input from the reception antenna 21 in the units of the number of users and the multiplex number of one user, and for inversely diffusing the reception signals. Legends 23-1, 23-2, 23-3, ..., and 23-J denote demodulators for demodulating data from the signals output from the spectrum despreading demodulators 22-1 to 22-J. Legend 24 denotes a data detector for extracting user data from a demodulated data signal, and for monitoring a data error in a reception packet and measuring an uplink interference value. Legend 25 denotes a traffic control signal generator for inputting a signal that shows a measured uplink interference value and existence of a reception packet having a data error (hereinafter to be referred to as an erroneous packet), and for generating a retransmission request signal based on the uplink interference value. Legend 26 denotes a spectrum spreading modulator for diffusion modulating an output of the traffic control signal generator 25, and 27 denotes a carrier generator for generating a carrier. Legend 28 denotes a transmitter for superimposing a carrier transmitted from the carrier generator 27 on an output of the spectrum spreading modulator 26, and for outputting a superimposed result from a transmission antenna 29.

According to the present embodiment, the base station 2 transmits a retransmission request signal including a measured uplink interference value to the mobile station 1. The mobile station 1 has the deserializer 4 capable of variably setting a multiplex number based on a control signal from the control section 16. With this arrangement, when the mobile station 1 has received the retransmission request signal, this deserializer 4 automatically converts the transmission data into parallel signals. Therefore, the multiplex number at the mobile station 1 can take values from 1 to M. For example, when the multiplex number is M, the parallel signals are transmitted to only the spectrum spreading modulator corresponding to this number N (where N is an integer equal to or above 1 and less than M). The signals are not transmitted to other spectrum spreading modulators. As explained above, according to the present embodiment, it is not necessary to change over the deserializer with a changeover switch or like that at the time of changing the multiplex number. Therefore, it is possible to simplify the structure of the apparatus.

The operation of the mobile station 1 and the base station 2 in the present embodiment will be explained with reference to Figs . 17 (a) to (e). Fig. 17 (a) shows anexample of a case in which the multiplex number M = 4 during a normal transmission. It is assumed that it is possible to change the multiplex number to a retransmission multiplex number M' = 4 (corresponding to Fig. 17 (b)), a retransmission multiplex number M' = 3 (corresponding to Fig. 17 (c)), a retransmission multiplex number M' = 2 (corresponding to Fig. 17 (d)), and a retransmission multiplex number M' = 1 (corresponding to Fig. 17 (e)). Figs. 17 (a) to (e) show changes in a packet signal transmitted from the mobile station 1 according to a lapse of time.

First, the data generated by the mobile station 1 is input to the memory 3. The memory 3 holds the data as data for retransmission, and outputs a copy of this data. The copied data is input to the deserializer 4. The deserializer 4 divides the received data by M into M data, and outputs the divided data to the corresponding spectrum spreading modulators 7-1 to 7-M. In Figs. 17 (a) to (e), the received data is divided into four, and the divided data are output to the spectrum spreading modulators 7-1 to 7-4 (M = 4).

Thereafter, each spectrum spreading modulator multiplies a generated set of orthogonal codes to each divided data. The orthogonal codes refer to diffusion codes that do not have mutual correlation. The output signals from the spectrum spreading modulators 7-1 to 7-4 are added together by the adder 8, and the added result is then multiplexed by an orthogonal multi-code.

Finally, the transmitter 10 that has received the signal from the adder 8 adds a preamble B having a constant length (corresponding to PR in Fig. 17 (a)) consisting of clock synchronization codes for demodulation to the data multiplexed by the orthogonal multi-code (corresponding to A in Fig. 17 (a)). The transmitter 10 further superimposes a carrier from the carrier generator 9 on the data to generate a transmission packet, and transmits this packet via the antenna 11.

In the mean time, the base station 2 receives the packet transmitted from the mobile station 1 via the antenna 21, despreads the received packet by the spectrum despreading demodulators 22-1 to 22-4 (M = 4), and then demodulates the despread result by the demodulators 23-1 to 23-4 respectively. The data detector 24 extracts user data from the demodulated data signal, and checks a data error in the reception packet. When there is no data error in the reception packet, the reception packet is output as a formal user data. When there is a data error in the reception packet, retransmission control is started.

The operation of the retransmission control at the base station 2 and the mobile station 1 will be explained next with reference to flowcharts shown in Fig 4 and Fig. 5. Fig. 4 is a flowchart showing a retransmission control method at the base station 2, and Fig. 5 is a flowchart showing a retransmission control method at the mobile station 1.

First, the base station 2 always monitors a data error in the reception packet by the data detector 24 (step S1). When no data error has been recognized (step S1, NO), the base station 2 outputs this reception packet as a formal user data. When a data error has been recognized (step S1, YES), the base station 2 measures an uplink interference value at this point of time (step S2).

The measured uplink interference value is input to the traffic control signal generator 25. The traffic control signal generator 25 converts the uplink interference value into a signal of a packet data format that includes the uplink interference value. Thereafter, the spectrum spreading modulator 26 spreading modulates this signal of the packet data format. Then, the transmitter 28 adds the preamble B for demodulation to this signal, superimposes the carrier from the carrier generator 27 on this signal, and transmits the superimposed result as a retransmission request signal to the mobile station 1 that has transmitted the erroneous data (step S3).

In the mean time, at the mobile station 1 that has received the retransmission request signal including the uplink interference value information (step S11, YES), the spectrum despreading demodulator 13 despreads this signal, and then the demodulator 14 demodulates this despread signal. The data detector 15 extracts the uplink interference value information from the demodulated signal, and outputs this uplink interference value information to the control section 16. The control section 16 extracts the previously stored data of the L symbol corresponding to the retransmission request signal from the memory 3 (step S12). Then, the control section 16 compares the received uplink interference value with a predetermined threshold value of a few stages (reference Fig. 6) (step S13). Fig. 6 is a diagram showing an example of a relationship between an uplink interference value and a retransmission multiplex number. The retransmission multiplex number corresponding to the threshold value of the uplink interference value (th1-1, th1-2, ..., and th1- (M-1)) is determined in advance.

When the uplink interference value is equal to or above 0 and is less than th1-1, the multiplex number at the retransmission time is M' = 1 (step S14-1). When the uplink interference value is equal to or above th1-1 and is less than th1-2, the multiplex number at the retransmission time is M' = 2 (step S14-2). When the uplink interference value is equal to or above th1-2 and is less than th1-3, the multiplex number at the retransmission time is M' = 3 (step S14-3). When the uplink interference value is equal to or above th1-3 and is less than th1-4, the multiplex number at the retransmission time is M' = 4 (step S14-4).

The retransmission multiplex number determined by the control section 16 is output to the deserializer 4. The deserializer 4 converts the data output from the memory 3 into parallel signals of the determined multiplex number. Thereafter, the mobile station 1 transmits the retransmission data to the base station 2 via the spectrum spreading modulator, the adder, the transmitter and the antenna, in a similar manner to that of the above-described normal transmission (reference Figs. 17 (b), (c), (d) and (e)).

As explained above, according to the present embodiment, the mobile station 1 determines the retransmission multiplex number according to the measured uplink interference value. Although it is impossible to accurately measure channel traffic in the actual devices because of the interference and others, it is easy to estimate the channel traffic when the uplink interference value can be measured, as the channel traffic is proportional to the uplink interference value. Therefore, according to the present embodiment, it is possible to change the multiplex number at the retransmission time according to the uplink interference value. As a result, it is possible to obtain optimum throughput under the existence of any channel traffic.

A second embodiment of the present invention will be explained next.

According to the above-described first embodiment, the base station 2 transmits a retransmission request signal including a measured uplink interference value to the mobile station 1. The mobile station 1 extracts the uplink interference value from the received retransmission request signal, compares this uplink interference value with a predetermined threshold value having a plurality of stages, and determines a retransmission multiplex number according to the uplink interference value based on a result of this comparison. The mobile station 1 then controls the deserializer 4 based on a control signal from the control section 16 so that the deserializer 4 automatically converts the transmission data for retransmission into parallel signals.

On the other hand, in the present embodiment, the retransmission multiplex number according to the uplink interference value is determined by a different method from that explained above. In the present embodiment, the system structure, the internal structure of the base station, and the internal structure of the mobile station are similar to those explained with reference to Fig. 1, Fig. 2 and Fig. 3. Therefore, those similar parts are attached with identical legends, and their explanation will be omitted. Further, the operation during the normal transmission and the retransmission control method at the base station 2 shown in Fig. 4 are also similar to those of the above embodiment, and therefore, their explanation will be omitted.

The operation of the mobile station 1 in the present embodiment will be explained below. Fig. 7 is a flowchart showing a retransmission control method at the mobile station 1. First, at the mobile station 1 that has received the retransmission request signal including the uplink interference value information (step S21, YES), the spectrum despreading demodulator 13 despreads this signal, and then the demodulator 14 demodulates this despread signal. The data detector 15 extracts the uplink interference value information from the demodulated signal, and outputs this uplink interference value information to the control section 16. The control section 16 extracts the previously stored data of the L symbol corresponding to the retransmission request signal from the memory 3 (step S22). Then, the control section 16 compares the received uplink interference value with a predetermined threshold value (reference Fig. 8) (step S23). Fig. 8 is a diagram showing an example of a relationship between an uplink interference value and a retransmission multiplex number. The retransmission multiplex number corresponding to the uplink interference value is determined depending on whether the uplink interference value exceeds the threshold value (= th2) or not.

When the uplink interference value is less than th2 (step S23, NO), the multiplex number at the retransmission time is M' = 1 (step S25). When the uplink interference value is equal to or above th2 (step S23, YES), the multiplex number at the retransmission time is M' = M (step S24).

The retransmission multiplex number determined by the control section 16 is output to the deserializer 4. The deserializer 4 converts the data output from the memory 3 into parallel signals of the determined multiplex number. Thereafter, the mobile station 1 transmits the retransmission data to the base station 2 via the spectrum spreading modulator, the adder, the transmitter and the antenna, in a similar manner to that of the normal transmission described in the first embodiment (reference Figs. 17 (b) and (e)).

As explained above, according to the present embodiment, the mobile station 1 determines the retransmission multiplex number according to the measured uplink interference value. Therefore, in the present embodiment, it is possible to change the multiplex number at the retransmission time according to the uplink interference value, in a similar manner to that of the first embodiment. As a result, it is possible to obtain optimum throughput under the existence of any channel traffic. Further, it is possible to determine the retransmission multiplex number based on one threshold value without requiring a comparison between a uplink interference value and a threshold value of a plurality of stages. As a result, it is possible to simplify the control section 16, which makes the mobile station compact as a whole.

A third embodiment of the present invention will be explained next.

According to the above-described first and second embodiments, the base station 2 transmits a retransmission request signal including a measured uplink interference value to the mobile station 1. The mobile station 1 extracts the uplink interference value from the received retransmission request signal, compares this uplink interference value with a predetermined threshold value (or a threshold value having a plurality of stages), and determines a retransmission multiplex number according to the uplink interference value based on a result of this comparison. The mobile station 1 then controls the deserializer 4 based on a control signal from the control section 16 so that the deserializer 4 automatically converts the transmission data for retransmission into parallel signals.

On the other hand, in the present embodiment, the retransmission multiplex number according to the uplink interference value is determined by a different method from that explained above. In the present embodiment, the system structure, the internal structure of the base station, and the internal structure of the mobile station are similar to those explained with reference to Fig. 1, Fig. 2 and Fig. 3. Therefore, those similar parts are attached with identical legends, and their explanation will be omitted. Further, the operation during the normal transmission and the retransmission control method at the base station 2 shown in Fig. 4 are also similar to those of the above embodiments, and therefore, their explanation will be omitted.

The operation of the mobile station 1 in the present embodiment will be explained below. Fig. 9 is a flowchart showing a retransmission control method at the mobile station 1. First, at the mobile station 1 that has received the retransmission request signal including the uplink interference value information (step S31, YES), the spectrum despreading demodulator 13 despreads this signal, and then the demodulator 14 demodulates this dispread signal. The data detector 15 extracts the uplink interference value information from the demodulated signal, and outputs this uplink interference value information to the control section 16. The control section 16 extracts the previously stored data of the L symbol corresponding to the retransmission request signal from the memory 3 (step S32). Thereafter, the control section 16 determines a probability for determining a retransmission multiplex number based on the received uplink interference value (step S33).

Fig. 10 is a diagram showing an example of a relationship between an uplink interference value and a probability. A probability is determined based on the uplink interference value. A retransmission multiplex number is determined based on this probability. For example, when the uplink interference value is 0, the probability that the multiplexing is carried out at the retransmission time is 0%. When the uplink interference value exceeds a certain specific value, the probability that the multiplexing is carried out at the retransmission time is 100%. When the probability that the multiplexing is carried out at the retransmission time is other than 0% or 100%, the multiplexing is carried out in that probability.

The control section 16 generates a random number of 0 or 1 according to the determined probability (step S34). When the probability is 0%, the control section 16 generates always 0. When the probability is 100%, the control section 16 generates always 1. When the probability is between 0% and 100%, the control section 16 generates 0 or 1 according to this probability. Therefore, when the generated random number is 0 (step S34, 0), the control section 16 does not carry out the multiplexing at the retransmission time (step S36). When the generated random number is 1 (step S34, 1), the control section 16 carries out the multiplexing at the retransmission time (step S35).

The retransmission multiplex number determined by the control section 16 is output to the deserializer 4. The deserializer 4 converts the data output from the memory 3 into parallel signals of the determined multiplex number. Thereafter, the mobile station 1 transmits the retransmission data to the base station 2 via the spectrum spreading modulator, the adder, the transmitter and the antenna, in a similar manner to that of the normal transmission described in the first embodiment (reference Figs. 17 (b) and (e)).

As explained above, according to the present embodiment, the mobile station 1 obtains a probability for determining a retransmission multiplex number based on the measured uplink interference value. The mobile station 1 then determines the retransmission multiplex number based on this probability. Therefore, in the present embodiment, it is possible to change the multiplex number at the retransmission time according to the uplink interference value, in a similar manner to that of the first embodiment. As a result, it is possible to obtain optimum throughput under the existence of any channel traffic. Further, according to the present embodiment, in the case of determining a retransmission multiplex number based on a probability, it is possible to generate some variation in the packet length at the retransmission time for the same uplink interference value. Therefore, it is possible to restrict the dependency of the transmission speed on the uplink interference value to a certain level. As a result, it is possible to prevent the transmission speed from varying extremely at the retransmission time.

A fourth embodiment of the present invention will be explained next.

According to the above-described first embodiment, the base station 2 transmits a retransmission request signal including a measured uplink interference value to the mobile station 1. The mobile station 1 extracts the uplink interference value from the received retransmission request signal, compares this uplink interference value with a predetermined threshold value having a plurality of stages, and determines a retransmission multiplex number according to the uplink interference value based on a result of this comparison. The mobile station 1 then controls the deserializer 4 based on a control signal from the control section 16 so that the deserializer 4 automatically converts the transmission data for retransmission into parallel signals.

On the other hand, in the present embodiment, the retransmission multiplex number according to the uplink interference value is determined by a different method from that explained above. In the present embodiment, the system structure, the internal structure of the base station, and the internal structure of the mobile station are similar to those explained with reference to Fig. 1, Fig. 2 and Fig. 3. Therefore, those similar parts are attached with identical legends, and their explanation will be omitted. Further, the operation during the normal transmission is also similar to that of the above embodiment, and therefore, this explanation will be omitted.

The operation of the mobile station 1 and the base station 2 in the present embodiment will be explained below with reference to the drawings. The operation of the retransmission control at the base station 2 and the mobile station 1 will be explained with reference to flowcharts shown in Fig 11 and Fig. 12. Fig. 11 is a flowchart showing a retransmission control method at the base station 2, and Fig. 12 is a flowchart showing a retransmission control method at the mobile station 1.

First, the base station 2 always monitors a data error in the reception packet by the data detector 24 (step S41). When no data error has been recognized (step S41, NO), the base station 2 outputs this reception packet as a formal user data. When a data error has been recognized (step S41, YES), the base station 2 measures an uplink interference value at this point of time (step S42).

The measured uplink interference value is input to the traffic control signal generator 25. The traffic control signal generator 25 compares the received uplink interference value with a predetermined threshold value having a few stages (reference Fig. 6) (steps S43). In the present embodiment, the retransmission multiplex number corresponding to the threshold value of the uplink interference value (th1-1, th1-2, ..., and th1-(M-1)) is determined in advance, as shown in Fig. 6.

When the uplink interference value is equal to or above 0 and is less than th1-1, the multiplex number at the retransmission time is M' = 1 (step S44-1). When the uplink interference value is equal to or above th1-1 and is less than th1-2, the multiplex number at the retransmission time is M' = 2 (step S44-2). When the uplink interference value is equal to or above th1-2 and is less than th1-3, the multiplex number at the retransmission time is M' = 3 (step S44-3). When the uplink interference value is equal to or above th1-3 and is less than th1-4, the multiplex number at the retransmission time is M' = 4 (step S44-4).

Thereafter, the traffic control signal generator 25 generates a signal of the packet data format that includes the retransmission multiplex number information determined as described above. The spectrum spreading modulator 26 spreading modulates this signal of the packet data format. Then, the transmitter 28 adds the preamble B for demodulation to this signal, superimposes the carrier from the carrier generator 27 on this signal, and transmits the superimposed result as a retransmission request signal to the mobile station 1 that has transmitted the erroneous data (step S45).

In the mean time, at the mobile station 1 that has received the retransmission request signal including the uplink interference value information (step S51, YES), the spectrum despreading demodulator 13 despreads this signal, and then the demodulator 14 demodulates this dispread signal. The data detector 15 extracts the retransmission multiplex number information from the demodulated signal, and outputs this retransmission multiplex number information to the control section 16. The control section 16 extracts the previously stored data of the L symbol corresponding to the retransmission request signal from the memory 3 (step S52).

The retransmission multiplex number extracted from the control section 16 is output to the deserializer 4. The deserializer 4 converts the data output from the memory 3 into parallel signals of the determined multiplex number. Thereafter, the mobile station 1 transmits the retransmission data to the base station 2 via the spectrum spreading modulator, the adder, the transmitter and the antenna, in a similar manner to that of the above-described normal transmission (step S53, reference Figs. 17 (b), (c), (d) and (e)).

As explained above, in the present embodiment, the base station 2 determines the retransmission multiplex number according to the measured uplink interference value, and the mobile station 1 retransmits the transmission data based on the received retransmission multiplex number information. Therefore, according to the present embodiment, it is possible to change the multiplex number at the retransmission time according to the uplink interference value. As a result, it is possible to obtain optimum throughput under the existence of any channel traffic. Further, as the arithmetic processing can be omitted at the time of determining the retransmission multiplex number at the mobile station, it becomes possible to provide a compact terminal.

A fifth embodiment of the present invention will be explained next.

According to the above-described second embodiment, the base station 2 transmits a retransmission request signal including a measured uplink interference value to the mobile station 1. The mobile station 1 extracts the uplink interference value from the received retransmission request signal, compares this uplink interference value with one predetermined threshold value, and determines a retransmission multiplex number according to the uplink interference value based on a result of this comparison. The mobile station 1 then controls the deserializer 4 based on a control signal from the control section 16 so that the deserializer 4 automatically converts the transmission data for retransmission into parallel signals.

On the other hand, in the present embodiment, the retransmission multiplex number according to the uplink interference value is determined by a different method from that explained above. In the present embodiment, the system structure, the internal structure of the base station, and the internal structure of the mobile station are similar to those explained with reference to Fig. 1, Fig. 2 and Fig. 3. Therefore, those similar parts are attached with identical legends, and their explanation will be omitted. Further, the operation during the normal transmission and the retransmission control method at the mobile station 1 shown in Fig. 12 are also similar to those of the above embodiment, and therefore, their explanation will be omitted.

The operation of the base station 2 in the present embodiment will be explained below with reference to the drawings. Fig. 13 is a flowchart showing a retransmission control method at the base station 2. First, the base station 2 always monitors a data error in the reception packet by the data detector 24 (step S61). When no data error has been recognized (step S61, NO), the base station 2 outputs this reception packet as a formal user data. When a data error has been recognized (step S61, YES), the base station 2 measures an uplink interference value at this point of time (step S62).

The measured uplink interference value is input to the traffic control signal generator 25. The traffic control signal generator 25 compares the received uplink interference value with one predetermined threshold value (reference Fig. 8) (steps S63). When the uplink interference value is less than th2 (step S63, NO), the multiplex number at the retransmission time is M' = 1 (step S64). When the uplink interference value is equal to or above th2 (step S63, YES), the multiplex number at the retransmission time is M' = M (step S65).

Thereafter, the traffic control signal generator 25 generates a signal of the packet data format that includes the retransmission multiplex number information determined as described above. The spectrum spreading modulator 26 spreading modulates this signal of the packet data format. Then, the transmitter 28 adds the preamble B for demodulation to this signal, superimposes the carrier from the carrier generator 27 on this signal, and transmits the superimposed result as a retransmission request signal to the mobile station 1 that has transmitted the erroneous data (step S66).

As explained above, in the present embodiment, the base station 2 determines the retransmission multiplex number according to the measured uplink interference value, and the mobile station 1 retransmits the transmission data based on the received retransmission multiplex number information. Therefore, according to the present embodiment, it is possible to change the multiplex number at the retransmission time according to the uplink interference value. As a result, it is possible to obtain optimum throughput under the existence of any channel traffic. Further, as the retransmission multiplex number can be determined with one threshold value, it is possible to simplify the structure of the base station. Further, as the arithmetic processing can be omitted at the time of determining the retransmission multiplex number at the mobile station, it becomes possible to provide a compact terminal.

A sixth embodiment of the present invention will be explained next.

According to the above-described third embodiment, the base station 2 transmits a retransmission request signal including a measured uplink interference value to the mobile station 1. The mobile station 1 extracts the uplink interference value from the received retransmission request signal, and obtains a probability for determining a retransmission multiplex number based on this uplink interference value. The mobile station 1 determines the retransmission multiplex number based on this probability. The mobile station 1 then controls the deserializer 4 based on a control signal from the control section 16 so that the deserializer 4 automatically converts the transmission data for retransmission into parallel signals.

On the other hand, in the present embodiment, the retransmission multiplex number according to the uplink interference value is determined by a different method from. that explained above. In the present embodiment, the system structure, the internal structure of the base station, and the internal structure of the mobile station are similar to those explained with reference to Fig. 1, Fig. 2 and Fig. 3. Therefore, those similar parts are attached with identical legends, and their explanation will be omitted. Further, the operation during the normal transmission and the retransmission control method at the mobile station 1 shown in Fig. 12 are also similar to those of the above embodiment, and therefore, their explanation will be omitted.

The operation of the base station 2 in the present embodiment will be explained below with reference to the drawings. Fig. 14 is a flowchart showing a retransmission control method at the base station 2. First, the base station 2 always monitors a data error in the reception packet by the data detector 24 (step S71). When no data error has been recognized (step S71, NO), the base station 2 outputs this reception packet as a formal user data. When a data error has been recognized (step S71, YES), the base station 2 measures an uplink interference value at this point of time (step S72).

The measured uplink interference value is input to the traffic control signal generator 25. The traffic control signal generator 25 determines a probability for determining a retransmission multiplex number based on the received uplink interference value (step S73). As explained above with reference to Fig. 10, the probability is determined based on the uplink interference value, and the retransmission multiplex number is determined based on this probability. For example, when the uplink interference value is 0, the probability that the multiplexing is carried out at the retransmission time is 0%. When the uplink interference value exceeds a certain specific value, the probability that the multiplexing is carried out at the retransmission time is 100%. When the probability that the multiplexing is carried out at the retransmission time is other than 0% or 100%, the multiplexing is carried out in that probability.

The traffic control signal generator 25 generates a random number of 0 or 1 according to the determined probability (step S74). When the probability is 0%, the traffic control signal generator 25 generates always 0. When the probability is 100%, the traffic control signal generator 25 generates always 1. When the probability is between 0% and 100%, the traffic control signal generator 25 generates 0 or 1 according to this probability. Therefore, when the generated random number is 0 (step S74, 0), the traffic control signal generator 25 does not carry out the multiplexing at the retransmission time (step S76). When the generated random number is 1 (step S74, 1), the traffic control signal generator 25 carries out the multiplexing at the retransmission time (step S75).

Thereafter, the traffic control signal generator 25 generates a signal of the packet data format that includes the retransmission multiplex number information determined as described above. The spectrum spreading modulator 26 spreading modulates this signal of the packet data format. Then, the transmitter 28 adds the preamble B for demodulation to this signal, superimposes the carrier from the carrier generator 27 on this signal, and transmits the superimposed result as a retransmission request signal to the mobile station 1 that has transmitted the erroneous data (step S77).

As explained above, in the present embodiment, the base station 2 determines the retransmission multiplex number according to the measured uplink interference value, and the mobile station 1 retransmits the transmission data based on the received retransmission multiplex number information. Therefore, according to the present embodiment, it is possible to change the multiplex number at the retransmission time according to the uplink interference value. As a result, it is possible to obtain optimum throughput under the existence of any channel traffic. Further, according to the present embodiment, in the case of determining a retransmission multiplex number based on a probability, it is possible to generate some variation in the packet length at the retransmission time for the same uplink interference value. Therefore, it is possible to restrict the dependency of the transmission speed on the uplink interference value to a certain level. As a result, it is possible to prevent the transmission speed from varying extremely at the retransmission time. Further, as the arithmetic processing can be omitted at the time of determining the retransmission multiplex number at the mobile station, it becomes possible to provide a compact terminal.

A seventh embodiment of the present invention will be explained next.

According to the above-described third embodiment, the base station 2 transmits a retransmission request signal including a measured uplink interference value to the mobile station 1. The mobile station 1 extracts the uplink interference value from the received retransmission request signal, and obtains a probability for determining a retransmission multiplex number based on this uplink interference value. The mobile station 1 determines the retransmission multiplex number based on this probability. The mobile station 1 then controls the deserializer 4 based on a control signal from the control section 16 so that the deserializer 4 automatically converts the transmission data for retransmission into parallel signals.

On the other hand, in the present embodiment, the retransmission multiplex number according to the uplink interference value is determined by a different method from that explained above. In the present embodiment, the system structure, the internal structure of the base station, and the internal structure of the mobile station are similar to those explained with reference to Fig. 1, Fig. 2 and Fig. 3. Therefore, those similar parts are attached with identical legends, and their explanation will be omitted. Further, the operation during the normal transmission is also similar to that of the above embodiment, and therefore, this explanation will be omitted.

The operation of the base station 2 and the mobile station 1 in the present embodiment will be explained below with reference to the drawings. Fig. 15 is a flowchart showing a retransmission control method at the base station 2, and Fig. 16 is a flowchart showing a retransmission control method at the mobile station 1. First, the base station 2 always monitors a data error in the reception packet by the data detector 24 (step S81). When no data error has been recognized (step S81, NO), the base station 2 outputs this reception packet as a formal user data. When a data error has been recognized (step S81, YES), the base station 2 measures an uplink interference value at this point of time (step S82).

The measured uplink interference value is input to the traffic control signal generator 25. The traffic control signal generator 25 determines a probability for determining a retransmission multiplex number based on the received uplink interference value (step S83). As explained above with reference to Fig. 10, the probability is determined based on the uplink interference value, and the retransmission multiplex number is determined based on this probability. For example, when the uplink interference value is 0, the probability that the multiplexing is carried out at the mobile station 1 at the retransmission time is 0%. When the uplink interference value exceeds a certain specific value, the probability that the multiplexing is carried out at the mobile station 1 at the retransmission time is 100%. When the probability that the multiplexing is carried out at the retransmission time is other than 0% or 100%, the mobile station 1 carries out the multiplexing in that probability.

Thereafter, the traffic control signal generator 25 generates a signal of the packet data format that includes the probability information determined as described above. The spectrum spreading modulator 26 spreading modulates this signal of the packet data format. Then, the transmitter 28 adds the preamble B for demodulation to this signal, superimposes the carrier from the carrier generator 27 on this signal, and transmits the superimposed result as a retransmission request signal to the mobile station 1 that has transmitted the erroneous data (step S84).

In the mean time, at the mobile station 1 that has received the retransmission request signal including the probability information (step S91, YES), the spectrum despreading demodulator 13 despreads this signal, and then the demodulator 14 demodulates this dispread signal. The data detector 15 extracts the probability information from the demodulated signal, and outputs this probability information to the control section 16. The control section 16 extracts the previously stored data of the L symbol corresponding to the retransmission request signal from the memory 3 (step S92). Thereafter, the control section 16 generates a random number of 0 or 1 according to the extracted probability information (step S93). When the probability is 0%, the control section 16 generates always 0. When the probability is 100%, the control section 16 generates always 1. When the probability is between 0% and 100%, the control section 16 generates 0 or 1 according to this probability. Therefore, when the generated random number is 0 (step S93, 0), the control section 16 does not carry out the multiplexing at the retransmission time (step S95). When the generated random number is 1 (step S93, 1), the control section 16 carries out the multiplexing at the retransmission time (step S94).

The retransmission multiplex number determined by the control section 16 is output to the deserializer 4. The deserializer 4 converts the data output from the memory 3 into parallel signals of the determined multiplex number. Thereafter, the mobile station 1 transmits the retransmission data to the base station 2 via the spectrum spreading modulator, the adder, the transmitter and the antenna, in a similar manner to that of the normal transmission explained in the first embodiment (reference Figs. 17 (b) and (e)).

As explained above, in the present embodiment, the base station 2 obtains a probability for determining the retransmission multiplex number based on the measured uplink interference value, and the mobile station 1 determines a retransmission multiplex number based on the received probability information and retransmits the transmission data. Therefore, according to the present embodiment, it is possible to change the multiplex number at the retransmission time according to the uplink interference value. As a result, it is possible to obtain optimum throughput under the existence of any channel traffic. Further, according to the present embodiment, in the case of determining a retransmission multiplex number based on a probability, it is possible to generate some variation in the packet length at the retransmission time for the same uplink interference value. Therefore, it is possible to restrict the dependency of the transmission speed on the uplink interference value to a certain level. As a result, it is possible to prevent the transmission speed from varying extremely at the retransmission time. Further, as the arithmetic processing can be distributed at the time of determining the retransmission multiplex number at the base station and the mobile station, it becomes possible to simplify the structure of the base station and provide a compact terminal.

As explained above, according to the present invention, a retransmission multiplex number is determined based on a measured uplink interference value. Therefore, it is possible to change the multiplex number at the retransmission time according to the uplink interference value. Further, there is an effect that it is possible to obtain a mobile communication system capable of obtaining the throughput that is optimum under the existence of any channel traffic.

Further, according to the present invention, the mobile communication terminal compares the uplink interference value with a predetermined threshold value having a plurality of stages based on the uplink interference value measured by the base station, and determines a retransmission multiplex number according to the uplink interference value. Therefore, the mobile communication terminal can change the retransmission multiplex number according to the uplink interference value. As a result, there is an effect that it is possible to obtain optimum throughput under the existence of any channel traffic.

Further, according to the present invention, the mobile communication terminal compares the uplink interference value with a predetermined threshold value based on the uplink interference value measured by the base station, and determines whether the retransmission data is to be multiplexed or not based on a result of this comparison. Therefore, at the mobile communication terminal, it is possible to change the multiplex number at the retransmission time according to the uplink interference value. As a result, there is an effect that it is possible to obtain optimum throughput under the existence of any channel traffic. Further, at the mobile communication terminal, it is possible to determine the retransmission multiplex number based on one threshold value without requiring a comparison between a uplink interference value and a threshold value of a plurality of stages. As a result, there is an effect that it is possible to simplify the internal structure of the mobile communication terminal, which makes the terminal compact as a whole.

Further, according to the present invention, the mobile communication terminal obtains a probability for determining a retransmission multiplex number based on the uplink interference value measured by the base station, and determines the retransmission multiplex number based on this probability. Therefore, at the mobile communication terminal, it is possible to change the multiplex number at the retransmission time according to the uplink interference value. As a result, there is an effect that it is possible to obtain optimum throughput under the existence of any channel traffic. Further, in the case of determining a retransmission multiplex number based on a probability, it is possible to restrict the dependency of the transmission speed on the uplink interference value to a certain level. As a result, there is an effect that it is possible to prevent the transmission speed from varying extremely at the retransmission time.

Further, according to the present invention, the base station compares the measured uplink interference value with a predetermined threshold value having a plurality of stages, and determines a retransmission multiplex number according to the uplink interference value based on a result of this comparison. The mobile communication terminal retransmits the transmission data based on the received retransmission multiplex number. Therefore, at the base station, it is possible to change the multiplex number at the retransmission time according to the uplink interference value. As a result, there is an effect that it is possible to obtain optimum throughput under the existence of any channel traffic. Further, as the arithmetic processing can be omitted at the time of determining the retransmission multiplex number at the mobile communication terminal, there is an effect that it becomes possible to provide a compact terminal.

Further, according to the present invention, the base station compares the measured uplink interference value with a predetermined threshold value, and determines whether the retransmission data is to be multiplexed or not based on a result of this comparison. The mobile communication terminal retransmits the transmission data based on the received retransmission multiplex number information. Therefore, at the base station, it is possible to change the multiplex number at the retransmission time according to the uplink interference value. As a result, there is an effect that it is possible to obtain optimum throughput under the existence of any channel traffic. Further, as the retransmission multiplex number can be determined based on one threshold value, there is an effect that it is possible to simplify the structure of the base station. Further, as the arithmetic processing can be omitted at the time of determining the retransmission multiplex number at the mobile communication terminal, there is an effect that it becomes possible to provide a compact terminal.

Further, according to the present invention, the base station obtains a probability for determining a retransmission multiplex number based on the measured uplink interference value, determines a retransmission multiplex number based on this probability, and determines a retransmission multiplex number according to the measured uplink interference value. The mobile communication terminal retransmits the transmission data based on the received retransmission multiplex number information. Therefore, at the base station, it is possible to change the multiplex number at the retransmission time according to the uplink interference value. As a result, there is an effect that it is possible to obtain optimum throughput under the existence of any channel traffic. Further, in the case of determining a retransmission multiplex number based on a probability, it is possible to restrict the dependency of the transmission speed on the uplink interference value to a certain level. As a result, there is an effect that it is possible to prevent the transmission speed from varying extremely at the retransmission time. Further, as the arithmetic processing can be omitted at the time of determining the retransmission multiplex number at the mobile communication terminal, there is an effect that it becomes possible to provide a compact terminal.

Further, according to the present invention, the base station obtains a probability for determining a retransmission multiplex number based on the measured uplink interference value, and the mobile communication terminal determines a retransmission multiplex number based on the received probability information, and retransmits the transmission data. Therefore, it is possible to change the multiplex number at the transmission time according to the uplink interference value by distributing the processing between the base station and the mobile communication terminal. As a result, there is an effect that it is possible to obtain optimum throughput under the existence of any channel traffic. Further, in the case of determining a retransmission multiplex number based on a probability, it is possible to restrict the dependency of the transmission speed on the uplink interference value to a certain level. As a result, there is an effect that it is possible to prevent the transmission speed from varying extremely at the retransmission time. Further, as the arithmetic processing can be distributed at the time of determining the retransmission multiplex number at the base station and the mobile communication terminal, there is an effect that it is possible to simplify the structure of the base station and to provide a compact terminal.

Further, according to the present invention, a retransmission multiplex number is determined based on a measured uplink interference value. Therefore, there is an effect that it is possible to change the multiplex number at the retransmission time according to the uplink interference value.

Further, according to the present invention, the base station transmits a retransmission request signal including a measured uplink interference value to a mobile communication terminal. Therefore, there is an effect that it is possible to omit the arithmetic processing for determining a retransmission multiplex number at the base station, which can simplify the structure of the apparatus.

Further, according to the present invention, the mobile communication terminal determines a retransmission multiplex number based on the uplink interference value measured by the base station. Therefore, there is an effect that it is possible to omit the arithmetic processing for determining a retransmission multiplex number at the base station, which can simplify the structure of the apparatus.

Further, according to the present invention, the base station compares the measured uplink interference value with a predetermined threshold value having a plurality of stages, and determines a retransmission multiplex number according to the uplink interference value based on a result of this comparison. The mobile communication terminal retransmits the transmission data based on the received retransmission multiplex number. Therefore, there is an effect that it is possible to omit the arithmetic processing for determining a retransmission multiplex number at the mobile communication terminal, which makes it possible to provide a compact terminal.

Further, according to the present invention, the base station compares the measured uplink interference value with a predetermined threshold value, and determines whether the retransmission data is to be multiplexed or not based on a result of this comparison. The mobile communication terminal retransmits the transmission data based on the received retransmission multiplex number. As the retransmission multiplex number can be determined based on one threshold value, there is an effect that it is possible to simplify the structure of the base station. Further, as the arithmetic processing can be omitted at the time of determining the retransmission multiplex number at the mobile communication terminal, there is an effect that it becomes possible to provide a compact terminal.

Further, according to the present invention, the base station obtains a probability for determining a retransmission multiplex number based on the measured uplink interference value, determines a retransmission multiplex number based on this probability, and determines a retransmission multiplex number according to the measured uplink interference value. The mobile communication terminal retransmits the transmission data based on the received retransmission multiplex number information. Therefore, it is possible to restrict the dependency of the transmission speed on the uplink interference value to a certain level. As a result, there is an effect that it is possible to prevent the transmission speed from varying extremely at the retransmission time. Further, as the arithmetic processing can be omitted at the time of determining the retransmission multiplex number at the mobile communication terminal, there is an effect that it becomes possible to provide a compact terminal.

Further, according to the present invention, the base station obtains a probability for determining a retransmission multiplex number based on the measured uplink interference value, and the mobile communication terminal determines a retransmission multiplex number based on the received probability information, and retransmits the transmission data. Therefore, it is possible to restrict the dependency of the transmission speed on the uplink interference value to a certain level. As a result, there is an effect that it is possible to prevent the transmission speed from varying extremely at the retransmission time. Further, as the arithmetic processing can be distributed at the time of determining the retransmission multiplex number at the base station and the mobile communication terminal, there is an effect that it is possible to simplify the structure of the base station and to provide a compact terminal.

Further, according to the present invention, a retransmission multiplex number is determined based on a measured uplink interference value. Therefore, there is an effect that it is possible to obtain the mobile communication terminal capable of changing the multiplex number at the retransmission time according to the uplink interference value.

Further, according to the present invention, the mobile communication terminal that has received a retransmission request signal determines a multiplex number based on this signal, automatically converts the transmission data into parallel signals, and then multiplexes the parallel signals. Based on this arrangement, it is possible to take a plurality of values for the multiplex number at the mobile communication terminal. Further, it is not necessary to change over the series-parallel converting unit by a changeover switch or the like when the multiplex number is changed over. Therefore, there is an effect that it is possible to simplify the structure of the apparatus.

Further, according to the present invention, the mobile communication terminal compares the uplink interference value with a predetermined threshold value having a plurality of stages, and determines the retransmission multiplex number according to the uplink interference value based on a result of this comparison. Therefore, there is an effect that, at the mobile communication terminal, it is possible to change the multiplex number at the retransmission time according to the uplink interference value.

Further, according to the present invention, the mobile communication terminal compares the uplink interference value with a predetermined threshold value based on the uplink interference value measured by the base station, and determines whether the retransmission data is to be multiplexed or not based on a result of this comparison. Therefore, at the mobile communication terminal, it is possible to determine the retransmission multiplex number based on one threshold value without requiring a comparison between an uplink interference value and a threshold value of a plurality of stages. As a result, there is an effect that it is possible to simplify the internal structure of the mobile communication terminal, which makes the terminal compact as a whole.

Further, according to the present invention, the mobile communication terminal obtains a probability for determining a retransmission multiplex number based on the uplink interference value measured by the base station, and determines the retransmission multiplex number based on this probability. Therefore, it is possible to restrict the dependency of the transmission speed on the uplink interference value to a certain level. As a result, there is an effect that it is possible to prevent the transmission speed from varying extremely at the retransmission time.

Further, according to the present invention, the base station determines a retransmission multiplex number based on a measured uplink interference value, and the mobile communication terminal carries out a retransmission based on the determined retransmission multiplex number. Therefore, there is an effect that it is possible to omit the arithmetic processing for determining a retransmission multiplex number at the mobile communication terminal, which makes it possible to provide a compact terminal.

Further, according to the present invention, the base station obtains a probability for determining a retransmission multiplex number based on the measured uplink interference value, and the mobile communication terminal determines a retransmission multiplex number based on the received probability information, and retransmits the transmission data. Therefore, it is possible to restrict the dependency of the transmission speed on the uplink interference value to a certain level. As a result, there is an effect that it is possible to prevent the transmission speed from varying extremely at the retransmission time. Further, as the arithmetic processing can be distributed at the time of determining the retransmission multiplex number at the base station and the mobile communication terminal, there is an effect that it is possible to simplify the structure of the base station and to provide a compact terminal.

Further, according to the present invention, a retransmission multiplex number is determined based on a measured uplink interference value. Therefore, there is an effect that it is possible to change the multiplex number at the retransmission time according to the uplink interference value. Further, it is possible to obtain a retransmission control method capable of obtaining optimum throughput under the existence of any channel traffic.

Further, according to the present invention, at the retransmission step, the uplink interference value is compared with a predetermined threshold value having a plurality of stages and a retransmission multiplex number is determined according to the uplink interference value, based on the uplink interference value measured at the retransmission request signal transmission step. Therefore, at the retransmission step, it is possible to change the multiplex number at the retransmission time according to the uplink interference value. As a result, there is an effect that it is possible to obtain optimum throughput under the existence of any channel traffic.

Further, according to the present invention, at the retransmission step, the uplink interference value is compared with a predetermined threshold value and it is determined whether the retransmission data is to be multiplexed or not, based on the uplink interference value measured at the retransmission request signal transmission step. Therefore, at the retransmission step, it is possible to change the multiplex number at the retransmission time according to the uplink interference value. As a result, there is an effect that it is possible to obtain optimum throughput under the existence of any channel traffic. Further, at the retransmission step, it is possible to determine the retransmission multiplex number based on one threshold value without requiring a comparison between a uplink interference value and a threshold value of a plurality of stages. As a result, there is an effect that it is possible to simplify the internal structure of the mobile communication terminal, which makes the terminal compact as a whole.

Further, according to the present invention, at the retransmission step, a probability for determining a retransmission multiplex number is obtained and the retransmission multiplex number is determined using this probability, based on the uplink interference value measured by the base station. Therefore, at the retransmission step, it is possible to change the multiplex number at the retransmission time according to the uplink interference value. As a result, there is an effect that it is possible to obtain optimum throughput under the existence of any channel traffic. Further, in the case of determining a retransmission multiplex number based on a probability, it is possible to restrict the dependency of the transmission speed on the uplink interference value to a certain level. As a result, there is an effect that it is possible to prevent the transmission speed from varying extremely at the retransmission time.

Further, according to the present invention, at the retransmission request signal transmission step, the measured uplink interference value is compared with a predetermined threshold value having a plurality of stages, and a retransmission multiplex number according to the uplink interference value is determined based on a result of this comparison. Further, at the retransmission step, the transmission data is retransmitted based on the received retransmission multiplex number. Therefore, at the retransmission request signal transmission step, it is possible to change the multiplex number at the retransmission time according to the uplink interference value. As a result, there is an effect that it is possible to obtain optimum throughput under the existence of any channel traffic. Further, at the retransmission step, it is possible to omit the arithmetic processing at the time of determining the retransmission multiplex number. Therefore, there is an effect that it becomes possible to provide a compact terminal.

Further, according to the present invention, at the retransmission request signal transmission step, the measured uplink interference value is compared with a predetermined threshold value, and whether the retransmission data is to be multiplexed or not is determined based on a result of this comparison. Further, at the retransmission step, the transmission data is retransmitted based on the received retransmission multiplex number information. Therefore, at the retransmission request signal transmission step, it is possible to change the multiplex number at the retransmission time according to the uplink interference value. As a result, there is an effect that it is possible to obtain optimum throughput under the existence of any channel traffic. Further, as the retransmission multiplex number can be determined based on one threshold value, there is an effect that it is possible to simplify the internal structure of the base station. Further, at the retransmission step, it is possible to omit the arithmetic processing at the time of determining the retransmission multiplex number. Therefore, there is an effect that it becomes possible to provide a compact terminal.

Further, according to the present invention, at the retransmission request signal transmission step, a probability for determining a retransmission multiplex number is obtained based on the measured uplink interference value, a retransmission multiplex number is determined based on this probability, and a retransmission multiplex number is determined according to the measured uplink interference value. Further, at the retransmission step, the transmission data is retransmitted based on the received retransmission multiplex number information. Therefore, at the retransmission request signal transmission step, it is possible to change the multiplex number at the retransmission time according to the uplink interference value. As a result, there is an effect that it is possible to obtain optimum throughput under the existence of any channel traffic. Further, in the case of determining a retransmission multiplex number based on a probability, it is possible to restrict the dependency of the transmission speed on the uplink interference value to a certain level. As a result, there is an effect that it is possible to prevent the transmission speed from varying extremely at the retransmission time. Further, at the retransmission step, it is possible to omit the arithmetic processing at the time of determining the retransmission multiplex number. Therefore, there is an effect that it becomes possible to provide a compact terminal.

Further, according to the present invention, at the retransmission request signal transmission step, a probability for determining a retransmission multiplex number is obtained based on the measured uplink interference value. At the retransmission step, a retransmission multiplex number is determined based on the received probability information, and the transmission data is retransmitted. Therefore, it is possible to change the multiplex number at the retransmission time according to the uplink interference value by distributing the processing at the retransmission request signal transmission step and at the retransmission step. As a result, there is an effect that it is possible to obtain optimum throughput under the existence of any channel traffic. Further, in the case of determining a retransmission multiplex number based on a probability, it is possible to restrict the dependency of the transmission speed on the uplink interference value to a certain level. As a result, there is an effect that it is possible to prevent the transmission speed from varying extremely at the retransmission time. Further, as the arithmetic processing can be distributed at the time of determining the retransmission multiplex number at the base station and the mobile communication terminal, there is an effect that it is possible to simplify the structure of the base station and to provide a compact terminal.

### INDUSTRIAL APPLICABILITY

As explained above, the mobile communication system, the base station, the mobile communication terminal, and the retransmission control method relating to the present invention can be effectively applied to a radio communication that employs the CDMA (code-division multiple access) system. They are suitable for a mobile communication for carrying out a packet transmission based on the spread ALOHA system.

## Claims

1. A mobile communication system for carrying out a packet transmission based on the spread ALOHA system, the mobile communication system comprising:
a base station that measures an uplink interference value of a transmission path when a data error has occurred in reception packets multiplexed by plurality, generates a retransmission request signal of a packet format based on the measured uplink interference value, and then transmits the retransmission request signal to a mobile communication terminal that has transmitted the erroneous packet, and
a mobile communication terminal that outputs multiplexed transmission data as a transmission packet during a normal transmission, automatically divides the transmission data into parallel signals according to a retransmission multiplex number based on the retransmission request signal when the retransmission request signal has been received, multiplexes the parallel signals to generate a transmission packet for retransmission, and outputs the transmission packet to the base station.

2. The mobile communication system according to claim 1, wherein
the base station generates a retransmission request signal of a packet data format including the uplink interference value, and transmits the retransmission request signal to the mobile communication terminal that has transmitted the erroneous packet, and
the mobile communication terminal extracts the uplink interference value from the received retransmission request signal, compares the uplink interference value with a predetermined threshold value having a plurality of stages, and determines a retransmission multiplex number according to the uplink interference value based on a result of this comparison.

3. The mobile communication system according to claim 1, wherein
the base station generates a retransmission request signal of a packet data format including the uplink interference value, and transmits the retransmission request signal to the mobile communication terminal that has transmitted the erroneous packet, and
the mobile communication terminal extracts the uplink interference value from the received retransmission request signal, compares the uplink interference value with a predetermined threshold value, does not multiplex the retransmission data when the uplink interference value is lower than the threshold value, and determines a retransmission multiplex number to be in the same number as the multiplex number during a normal transmission when the uplink interference value is equal to or higher than the threshold value.

4. The mobile communication system according to claim 1, wherein
the base station generates a retransmission request signal of a packet data format including the uplink interference value, and transmits the retransmission request signal to the mobile communication terminal that has transmitted the erroneous packet, and
the mobile communication terminal extracts the uplink interference value from the received retransmission request signal, obtains a probability for determining a retransmission multiplex number based on the uplink interference value, generates a random number of 0 or 1 based on this probability, does not multiplex the retransmission data when the random number is 0, and determines a retransmission multiplex number to be in the same number as the multiplex number during a normal transmission when the random number is 1.

5. The mobile communication system according to claim 1, wherein
the base station compares the uplink interference value with a predetermined threshold value having a plurality of stages, determines a retransmission multiplex number according to the uplink interference value based on a result of this comparison, generates a retransmission request signal of a packet data format including the retransmission multiplex number, and transmits the retransmission request signal to the mobile communication terminal that has transmitted the erroneous packet, and
the mobile communication terminal extracts the retransmission multiplex number from the received retransmission request signal, and retransmits the transmission data according to the retransmission multiplex number.

6. The mobile communication system according to claim 1, wherein
the base station compares the uplink interference value with a predetermined threshold value, does not multiplex the retransmission data when the uplink interference value is lower than the threshold value, determines a retransmission multiplex number to be in the same number as the multiplex number during a normal transmission when the uplink interference value is equal to or higher than the threshold value, generates a retransmission request signal of a packet data format including the retransmission multiplex number, and transmits the retransmission request signal to the mobile communication terminal that has transmitted the erroneous packet, and
the mobile communication terminal extracts the retransmission multiplex number from the received retransmission request signal, and retransmits the transmission data according to the retransmission multiplex number.

7. The mobile communication system according to claim 1, wherein
the base station obtains a probability for determining a retransmission multiplex number based on the measured uplink interference value, generates a random number of 0 or 1 based on this probability, does not multiplex the retransmission data when the random number is 0, determines a retransmission multiplex number to be in the same number as the multiplex number during a normal transmission when the random number is 1, generates a retransmission request signal of a packet data format including the retransmission multiplex number, and transmits the retransmission request signal to the mobile communication terminal that has transmitted the erroneous packet, and
the mobile communication terminal extracts the retransmission multiplex number from the received retransmission request signal, and retransmits the transmission data according to the retransmission multiplex number.

8. The mobile communication system according to claim 1, wherein
the base station obtains a probability for determining a retransmission multiplex number based on the measured uplink interference value, generates a retransmission request signal of a packet data format including the probability, and transmits the retransmission request signal to the mobile communication terminal that has transmitted the erroneous packet, and
the mobile communication terminal extracts the probability from the received retransmission request signal, generates a random number of 0 or 1 based on this probability, does not multiplex the retransmission data when the random number is 0, and determines a retransmission multiplex number to be in the same number as the multiplex number during a normal transmission when the random number is 1.

9. A base station for carrying out a packet transmission based on the spread ALOHA system, wherein
the base station measures an uplink interference value of a transmission path when a data error has occurred in reception packets multiplexed by plurality, generates a retransmission request signal of a packet format based on the measured uplink interference value, and then transmits the retransmission request signal to a mobile communication terminal that has transmitted the erroneous packet.

10. The base station according to claim 9 comprising:
a data detecting unit that despreads and demodulates the received packet, extracts user data from a demodulated data signal thereby to always monitor a data error in the reception packets, and measures an uplink interference value when there has been a data error;
a retransmission request generating unit that generates a retransmission request signal based on the measured uplink interference value; and
a transmitting unit that converts the retransmission request signal in a packet format.

11. The base station according to claim 9, wherein
the base station generates a retransmission request signal of a packet data format including the uplink interference value, and transmits the retransmission request signal to the mobile communication terminal that has transmitted the erroneous packet.

12. The base station according to claim 9, wherein
the base station compares the uplink interference value with a predetermined threshold value having a plurality of stages, determines a retransmission multiplex number according to the uplink interference value based on a result of this comparison, generates a retransmission request signal of a packet data format including the retransmission multiplex number, and transmits the retransmission request signal to the mobile communication terminal that has transmitted the erroneous packet.

13. The base station according to claim 9, wherein
the base station compares the uplink interference value with a predetermined threshold value, does not multiplex the retransmission data when the uplink interference value is lower than the threshold value, determines a retransmission multiplex number to be in the same number as the multiplex number during a normal transmission when the uplink interference value is equal to or higher than the threshold value, generates a retransmission request signal of a packet data format including the retransmission multiplex number, and transmits the retransmission request signal to the mobile communication terminal that has transmitted the erroneous packet.

14. The base station according to claim 9, wherein
the base station obtains a probability for determining a retransmission multiplex number based on the measured uplink interference value, generates a random number of 0 or 1 based on this probability, does not multiplex the retransmission data when the random number is 0, determines a retransmission multiplex number to be in the same number as the multiplex number during a normal transmission when the random number is 1, generates a retransmission request signal of a packet data format including the retransmission multiplex number, and transmits the retransmission request signal to the mobile communication terminal that has transmitted the erroneous packet.

15. The base station according to claim 9, wherein
the base station obtains a probability for determining a retransmission multiplex number based on the measured uplink interference value, generates a retransmission request signal of a packet data format including the probability, and transmits the retransmission request signal to the mobile communication terminal that has transmitted the erroneous packet.

16. A mobile communication terminal for carrying out a packet transmission based on the spread ALOHA system, wherein
the mobile communication terminal outputs multiplexed transmission data as a transmission packet during a normal transmission, automatically divides the transmission data into parallel signals according to a retransmission multiplex number determined based on the retransmission request signal when the retransmission request signal has been received, further multiplexes the parallel signals to generate a transmission packet for retransmission, and outputs the transmission packet to the base station.

17. The mobile communication terminal according to claim 16 comprising:
a series-parallel converting unit that converts the internally generated transmission data into parallel signals according to a predetermined multiplex number;
a transmitting unit that spreading modulates the plurality of parallel signals, multiplexes the modulation signals by a predetermined method, and outputs the multiplexed modulation signals as a transmission packet;
a retransmission request detecting unit that receives a retransmission request signal in the packet format, and despreads and demodulates this signal thereby to detect the retransmission request signal; and
a control unit that decides a multiplex number of the parallel signals used by the series-parallel converting unit, based on the retransmission request signal.

18. The mobile communication terminal according to claim 16, wherein
the mobile communication terminal extracts an uplink interference value from the received retransmission request signal, compares this uplink interference value with a predetermined threshold value having a plurality of stages, and determines the retransmission multiplex number according to the uplink interference value based on a result of this comparison.

19. The mobile communication terminal according to claim 16, wherein
the mobile communication terminal extracts the uplink interference value from the received retransmission request signal, compares the uplink interference value with a predetermined threshold value, does not multiplex the retransmission data when the uplink interference value is lower than the threshold value, and determines a retransmission multiplex number to be in the same number as the multiplex number during a normal transmission when the uplink interference value is equal to or higher than the threshold value.

20. The mobile communication terminal according to claim 16, wherein
the mobile communication terminal extracts the uplink interference value from the received retransmission request signal, obtains a probability for determining a retransmission multiplex number based on the uplink interference value, generates a random number of 0 or 1 based on this probability, does not multiplex the retransmission data when the random number is 0, and determines a retransmission multiplex number to be in the same number as the multiplex number during a normal transmission when the random number is 1.

21. The mobile communication terminal according to claim 16, wherein
the mobile communication terminal extracts the retransmission multiplex number from the received retransmission request signal, and retransmits the transmission data according to the retransmission multiplex number.

22. The mobile communication terminal according to claim 16, wherein
the mobile communication terminal extracts the probability from the received retransmission request signal, generates a random number of 0 or 1 based on this probability, does not multiplex the retransmission data when the random number is 0, and determines a retransmission multiplex number to be in the same number as the multiplex number during a normal transmission when the random number is 1.

23. A retransmission control method for controlling a retransmission between a mobile communication terminal and a base station in a mobile communication system for carrying out a packet transmission based on the spread ALOHA system, the retransmission control method comprising:
a retransmission request signal transmission step of measuring an uplink interference value of a transmission path when a data error has occurred in reception packets multiplexed by plurality, generating a retransmission request signal of a packet format based on the measured uplink interference value, and then transmitting the retransmission request signal to a mobile communication terminal that has transmitted the erroneous packet; and
a retransmission step of automatically dividing the transmission data into parallel signals according to a retransmission multiplex number based on the retransmission request signal when the retransmission request signal has been received, further multiplexing the parallel signals to generate a transmission packet for retransmission, and outputting the transmission packet to the base station.

24. The retransmission control method according to claim 23, wherein
the retransmission request signal transmission step is for generating a retransmission request signal of a packet data format including the uplink interference value, and transmitting the retransmission request signal to the mobile communication terminal that has transmitted the erroneous packet, and
the retransmission step is for extracting the uplink interference value from the received retransmission request signal, comparing the uplink interference value with a predetermined threshold value having a plurality of stages, and determining a retransmission multiplex number according to the uplink interference value based on a result of this comparison.

25. The retransmission control method according to claim 23, wherein
the retransmission request signal transmission step is for generating a retransmission request signal of a packet data format including the uplink interference value, and transmitting the retransmission request signal to the mobile communication terminal that has transmitted the erroneous packet, and
the retransmission step is for extracting the uplink interference value from the received retransmission request signal, comparing the uplink interference value with a predetermined threshold value, not multiplexing the retransmission data when the uplink interference value is lower than the threshold value, and determining a retransmission multiplex number to be in the same number as the multiplex number during a normal transmission when the uplink interference value is equal to or higher than the threshold value.

26. The retransmission control method according to claim 23, wherein
the retransmission request signal transmission step is for generating a retransmission request signal of a packet data format including the uplink interference value, and transmitting the retransmission request signal to the mobile communication terminal that has transmitted the erroneous packet, and
the retransmission step is for extracting the uplink interference value from the received retransmission request signal, obtaining a probability for determining a retransmission multiplex number based on the uplink interference value, generating a random number of 0 or 1 based on this probability, not multiplexing the retransmission data when the random number is 0, and determining a retransmission multiplex number to be in the same number as the multiplex number during a normal transmission when the random number is 1.

27. The retransmission control method according to claim 23, wherein
the retransmission request signal transmission step is for comparing the uplink interference value with a predetermined threshold value having a plurality of stages, determining a retransmission multiplex number according to the uplink interference value based on a result of this comparison, generating a retransmission request signal of a packet data format including the retransmission multiplex number, and transmitting the retransmission request signal to the mobile communication terminal that has transmitted the erroneous packet, and
the retransmission step is for extracting the retransmission multiplex number from the received retransmission request signal, and retransferring the transmission data according to the retransmission multiplex number.

28. The retransmission control method according to claim 23, wherein
the retransmission request signal transmission step is for comparing the uplink interference value with a predetermined threshold value, not multiplexing the retransmission data when the uplink interference value is lower than the threshold value, determining a retransmission multiplex number to be in the same number as the multiplex number during a normal transmission when the uplink interference value is equal to or higher than the threshold value, generating a retransmission request signal of a packet data format including the retransmission multiplex number, and transmitting the retransmission request signal to the mobile communication terminal that has transmitted the erroneous packet, and
the retransmission step is for extracting the retransmission multiplex number from the received retransmission request signal, and retransferring the transmission data according to the retransmission multiplex number.

29. The retransmission control method according to claim 23, wherein
the retransmission request signal transmission step is for obtaining a probability for determining a retransmission multiplex number based on the measured uplink interference value, generating a random number of 0 or 1 based on this probability, not multiplexing the retransmission data when the random number is 0, determining a retransmission multiplex number to be in the same number as the multiplex number during a normal transmission when the random number is 1, generating a retransmission request signal of a packet data format including the retransmission multiplex number, and transmitting the retransmission request signal to the mobile communication terminal that has transmitted the erroneous packet, and
the retransmission step is for extracting the retransmission multiplex number from the received retransmission request signal, and retransferring the transmission data according to the retransmission multiplex number.

30. The retransmission control method according to claim 23, wherein
the retransmission request signal transmission step is for obtaining a probability for determining a retransmission multiplex number based on the measured uplink interference value, generating a retransmission request signal of a packet data format including the probability, and transmitting the retransmission request signal to the mobile communication terminal that has transmitted the erroneous packet, and
the retransmission step is for extracting the probability from the received retransmission request signal, generating a random number of 0 or 1 based on this probability, not multiplexing the retransmission data when the random number is 0, and determining a retransmission multiplex number to be in the same number as the multiplex number during a normal transmission when the random number is 1.
